# EUROPÄISCHE PATENTANMELDUNG

(11) **EP 3 859 183 A1**
(43) Veröffentlichungstag der Anmeldung: **04.08.2021**
(21) Anmeldenummer: 21154116.4
(22) Anmeldetag: 28.01.2021
(51) Int. Cl.: F16D 65/12, B62L 1/00

(54) **BREMSSYSTEM MIT BREMSSCHEIBE**

(30) Priorität: 29.01.2020 DE 102020102099
(71) Anmelder: Gustav Magenwirth GmbH & Co. KG, 72574 Bad Urach (DE)
(72) Erfinder: Glück, Oskar, 72768 Reutlingen (DE); Ruopp, Michael, 89180 Berghülen (DE)
(74) Vertreter: Hoeger, Stellrecht & Partner Patentanwälte mbB

(57) **Zusammenfassung**

Bremssystems für ein Fahrzeug, insbesondere ein lenkergeführtes Fahrzeug, umfassend eine Bremsscheibe (210) mit einem Reibring (222) und einem Montagering (224), wobei der Reibring und der Montagering zumindest teilweise durch eine Verbindung (250), die kraft- und/oder formschlüssig aber nicht stoffschlüssig ist, miteinander verbunden sind und/oder zumindest teilweise über eine unter Vorspannung stehende Verbindung (250) miteinander verbunden sind und/oder zumindest teilweise durch eine Verbindung verbunden sind, wobei die Verbindung zumindest eine Stützfläche und zumindest ein Anschlagelement, welches zumindest in Reibkontakt mit der Stützfläche steht.

## Beschreibung

Die Erfindung betrifft ein Bremssystem umfassend eine Bremsscheibe. Außerdem betrifft die Erfindung einen Bremsscheibenrohling für ein Bremssystem mit einer Bremsscheibe sowie ein Fahrzeug mit einem solchen Bremssystem.

Die Bremsscheibe umfasst einen Reibring und einen Montagering. Insbesondere ist der Reibring für ein bremsendes Zusammenwirken mit beispielsweise einer Bremszange vorgesehen und der Montagering ausgebildet um mittels diesem die Bremsscheibe an ein Rad eines Fahrzeugs zu montieren.

Bei Bremsscheiben stellt sich die Herausforderung, dass bei einer Bremseinwirkung auf den Reibring dieser sich gewöhnlich stark erhitzt und dadurch sich thermisch bedingt ausdehnt. Beispielsweise erhitzt sich ein Reibring bei einem Bremsvorgang auf über 200° C, insbesondere auf über 400° C und es können beispielsweise sogar Temperaturen von etwa 600° C erreicht werden.

Der Montagering sollte im Betrieb der Bremsscheibe möglichst stabil und verzugsfrei sein, damit eine sichere und eine Bremskraft zuverlässig übertragende Montageverbindung zwischen dem Montagering und dem Rad, insbesondere dessen Nabe, gewährleistet ist.

Auch sollten der Reibring und der Montagering durch eine stabile Verbindung miteinander verbunden sein, damit eine bei einem Bremsvorgang an dem Reibring erzeugte Bremskraft mit einem Bremsdrehmoment auf den Montagering und von diesem auf das Rad übertragen werden kann. Andererseits sollte eine thermische Verbindung zwischen dem Reibring und der Montagering möglichst weitgehend unterbunden werden, damit die bei dem bremsenden Zusammenwirken erzeugte thermische Last am Reibring sich möglichst weitgehend nicht auf den Montagering auswirkt.

Hierbei ist auch das als Tellern bekannte, nachteilige Phänomen zu beachten, bei welchem der Durchmesser der Bremsscheibe aufgrund thermischer Ausdehnung zunimmt und wenn die Verbindung zwischen Montage- und Reibring nicht flexibel genug ist, die Bremsscheibe zum Tellern neigt, das heißt zum Umklappen der Bremsscheibe aus ihrer Ebene heraus in eine Teller-artige Form.

Außerdem sollte die Bremsscheibe, insbesondere für durch eine Muskelkraft eines Fahrers angetriebene Fahrzeuge, beispielsweise für lenkergeführte Fahrzeuge, gewichtssparend ausgebildet sein. Vorteilhaft ist es, wenn die Bremsscheibe kostengünstig und materialsparend hergestellt werden kann.

Damit ist die der Erfindung zugrundeliegende Aufgabe, ein Bremssystem mit einer Bremsscheibe, insbesondere unter Berücksichtigung der voranstehend erläuterten Herausforderungen, zu verbessern.

Erfindungsgemäß wird diese Aufgabe durch ein Bremssystem gelöst, welches eine Bremsscheibe mit einem Reibring und einem Montagering umfasst, wobei der Reibring und der Montagering zumindest teilweise durch eine Verbindung miteinander verbunden sind, wobei die zumindest teilweise Verbindung kraft- und/oder formschlüssig aber nicht stoffschlüssig ist.

Ein Vorteil der erfindungsgemäßen Lösung ist beispielsweise, dass durch den Kraft- und/oder Formschluss bei einem Bremsvorgang ein Bremsdrehmoment von dem Reibring auf den Montagering übertragen werden kann, aber eine thermische Verbindung zwischen dem Reibring und dem Montagering wegen des fehlenden Stoffschlusses zumindest vermindert ist. Beispielsweise wird durch den fehlenden Stoffschluss ein erhöhter Wärmewiderstand erreicht. Alternativ oder ergänzend wird die voranstehend genannte Aufgabe durch ein Bremssystem gelöst, welches eine Bremsscheibe mit einem Reibring und einem Montagering umfasst, wobei der Bremsring und der Montagering zumindest teilweise über eine unter Vorspannung stehende Verbindung miteinander verbunden sind.

Vorteilhaft an dieser Lösung ist insbesondere, dass die unter Vorspannung stehende Verbindung zumindest einen Teil des durch die thermische Last beim Bremsvorgang erzeugten Verzugs und/oder Verdrehens des Reibrings absorbieren kann und dadurch eine Beeinflussung des Montagerings durch Auswirkungen der bei einem Bremsvorgang erzeugten thermischen Last zumindest vermindert wird.

Alternativ oder ergänzend wird die voranstehend genannte Aufgabe erfindungsgemäß durch ein Bremssystem gelöst, welches eine Bremsscheibe mit einem Reibring und einem Montagering umfasst, wobei der Reibring und der Montagering zumindest teilweise durch eine Verbindung verbunden sind, wobei die zumindest teilweise Verbindung zumindest eine Stützfläche und zumindest ein Anschlagelement umfasst und das Anschlagelement zumindest in Reibkontakt mit der Stützfläche steht.

Ein Vorteil dieser erfindungsgemäßen Lösung ist beispielsweise darin zu sehen, dass durch den Reibkontakt zwischen der Stützfläche und dem Anschlagelement eine mechanisch stabilisierende Verbindung zwischen dem Reibring und dem Montagering bereitgestellt wird und andererseits vorzugsweise ein Wärmewiderstand an diesem Kontakt erhöht ist. Insbesondere weist das Anschlagelement relativ zu der Stützfläche entgegen dem Reibwiderstand zumindest eine gewisse Flexibilität auf, so dass eine Beeinflussung des Montagerings durch Auswirkungen der bei einem Bremsvorgang auf den Reibring erzeugten thermischen Last zumindest vermindert werden. Insbesondere erzeugt die Reibung an dem Kontakt zwischen dem Anschlagelement und der Stützfläche eine Dämpfung, so dass Schwingungen in der Bremsscheibe gedämpft werden. Beispielsweise werden Schwingungen bei einer Fahrt des Fahrzeugs durch Unebenheiten in dem Fahrweg über das Rad auf den Montagering übertragen und ein weiteres Ausbreiten der Schwingungen von dem Montagering auf den Reibring ist nachteilhaft, da dieser durch die Schwingungen beispielsweise an die Bremsbacken anstoßen könnte. Insbesondere können auch bei einem Bremsvorgang Schwingungen in dem Reibring entstehen, beispielsweise da die Bremszange lediglich jeweils auf einen kleinen Abschnitt des Reibrings einwirkt und der restliche Großteil des Reibrings frei von der direkten Einwirkung durch eine indirekte Beeinflussung zu schwingen beginnen kann. Diese auch als Bremsenklingeln und Bremsenquietschen bekannten Phänomene werden günstiger Weise durch die Reibdämpfung in der zumindest teilweisen Verbindung zumindest reduziert.

Dabei wird die voranstehend genannte Aufgabe durch die voranstehend genannten Lösungen jeweils einzeln, und besonders bevorzugt durch Kombination derselben, gelöst. Dabei wird jeweils der Reibring mit dem Montagering zumindest teilweise so verbunden, dass insbesondere eine Kraftübertragung über diese zumindest teilweise Verbindung erfolgt, diese zumindest teilweise Verbindung jedoch auch eine zumindest gewisse Flexibilität aufweist und vorzugsweise einen erhöhten Wärmewiderstand aufweist.

Somit wird vorteilhafterweise erreicht, dass diese zumindest teilweise Verbindung eine Bremsdrehmomentübertragung von dem Reibring auf den Montagering beim Bremsvorgang zumindest unterstützt und negative Beeinflussungen zwischen dem Reibring und dem Montagering, insbesondere durch die bei dem Bremsvorgang auftretende thermische Last und/oder durch Schwingungen derselben, zumindest vermindert werden.

Insbesondere weist die zumindest teilweise Verbindung der vorgeschlagenen Lösungen eine Flexibilität auf, um das Risiko des Tellerns der Bremsscheibe zumindest zu reduzieren.

Besonders günstig ist, dass die vorgeschlagenen Lösungen materialsparend und kostengünstig herstellbar sind.

Hinsichtlich einer generellen geometrischen Ausgestaltung der Bremsscheibe wurden noch keine näheren Angaben gemacht.

Insbesondere sind der Reibring und der Montagering zumindest im Wesentlichen konzentrisch zu einer Bremsscheibenachse angeordnet. Insbesondere ist der Montagering in einem radial zur Bremsscheibenachse innenliegenden, beispielsweise einem radial am weitesten innenliegenden, Bereich der Bremsscheibe angeordnet. Der Reibring ist vorzugsweise radial in einem äußeren Bereich der Bremsscheibe angeordnet und insbesondere ist der Reibring, in einem radial am äußersten liegenden Bereich der Bremsscheibe angeordnet.

Vorzugsweise weist der Montagering einen Durchbruch für eine Achse eines Rads, an welches die Bremsscheibe montiert werden kann oder montiert ist, auf und die Bremsscheibenachse verläuft durch diesen Durchbruch hindurch. Insbesondere fällt in dem an das Rad montierten Zustand der Bremsscheibe die Bremsscheibenachse mit einer Drehachse des Rads, um welche dieses drehbar gelagert ist, zusammen.

Insbesondere erstreckt sich die Bremsscheibe im Wesentlichen flächig und quer, insbesondere zumindest näherungsweise senkrecht, zu der Bremsschei benachse .

Hinsichtlich der weiteren Ausgestaltung der zumindest teilweisen Verbindung zwischen dem Reibring und dem Montagering wurden bislang keine näheren Angaben gemacht.

Besonders bevorzugt ist es, wenn die zumindest teilweise Verbindung durch zumindest eine Stützfläche und zumindest ein Anschlagelement, welche zueinander korrespondieren, umfasst. Vorzugsweise ist vorgesehen, dass die zumindest teilweise Verbindung durch mehrere Stützflächen und mehrere Anschlagelemente ausgebildet ist, wobei insbesondere jeweils eine Stützfläche und ein Anschlagelement zueinander korrespondieren. Insbesondere werden durch die korrespondierenden Stützflächen und Anschlagelemente in kostengünstiger und konstruktiv einfacher Weise kraft- und/oder formschlüssige aber nicht stoffschlüssige Verbindungen bereitgestellt. Vorzugsweise ist mittels der korrespondierenden Stützflächen und Anschlagelemente eine unter Vorspannung stehende Verbindung, welche günstiger Weise noch eine gewisse notwendige Flexibilität aufweist, realisiert.

Hinsichtlich der Ausgestaltung der zumindest einen Stützfläche und des zumindest einen Anschlagelements, insbesondere bezüglich der Ausgestaltung der mehreren Stützflächen und Anschlagelemente, wurden bislang keine detaillierten Angaben gemacht. Bei der nachfolgenden Erläuterung vorteilhafter Ausgestaltungen derselben ist unter der Bezugnahme auf zumindest ein Anschlagelement und/oder zumindest eine Stützfläche zu verstehen, dass das erläuterte Merkmal von dem zumindest einem Anschlagelement und/oder von der zumindest einen Stützfläche, oder von einem Anschlagelement, vorzugsweise von einigen, beispielsweise von sämtlichen, der mehreren Anschlagelemente und/oder von einer Stützfläche, bevorzugt von einigen, beispielsweise von sämtlichen, der mehreren Stützflächen realisiert wird.

Bei besonders bevorzugten Ausführungsformen ist vorgesehen, dass die zumindest teilweise Verbindung zumindest ein Anschlagelement, welches an eine Stützfläche angepresst ist, umfasst. Beispielsweise wird hierdurch in günstiger Weise eine Vorspannung in der Verbindung zwischen dem Montagering und dem Reibring übermittelt. Insbesondere erhöht sich durch das Anpressen ein Reibkontakt zwischen dem Anschlagelement und der Stützfläche, so dass vorzugsweise eine stabilere Verbindung mit erhöhter Dämpfungswirkung erreicht wird.

Besonders günstig ist es, wenn zumindest ein Anschlagelement in der auf die Bremsscheibenachse bezogenen Umlaufrichtung an eine Stützfläche angepresst ist. Vorzugsweise erfolgt hierdurch eine mechanische Stabilisierung der Teile, insbesondere des Reibrings und des Montagerings, innerhalb einer im Wesentlichen zu der Bremsscheibenachse senkrecht verlaufenden Ebene und ein Risiko eines axialen Ausscherens derselben wird zumindest reduziert.

Besonders günstig ist es, wenn die zumindest teilweise Verbindung zumindest eine Stützfläche und zumindest ein Anschlagelement umfasst, wobei sich das zumindest eine Anschlagelement an der zumindest einen Stützfläche abstützt, insbesondere kraftbeaufschlagt abstützt. Insbesondere wird dadurch eine kraftübertragende und damit einhergehende mechanisch stabilisierende Verbindung zwischen dem Montagering und dem Reibring bereitgestellt, welche vorzugsweise wechselseitige negative Beeinflussungen zwischen den beiden Ringen zumindest reduziert, beispielsweise durch eine Dämpfung an der Abstützung und/oder durch eine zumindest gewisse Verschiebbarkeit des Anschlagelements relativ zu der Stützfläche.

Vorzugsweise ist vorgesehen, dass zumindest eine Stützfläche sich zumindest näherungsweise senkrecht zu der auf die Bremsscheibenachse bezogene Umlaufrichtung erstreckt. Insbesondere verläuft somit die zumindest eine Stützfläche zumindest näherungsweise in der zur Bremsscheibenachse radialen Richtung und soweit die Bremsscheibe sich in der axialen Richtung ausdehnt auch in der axialen Richtung. Insbesondere sind dabei die zumindest eine Stützfläche und ein zu dieser korrespondierendes Anschlagelement in der Umlaufrichtung einander gegenüberliegend angeordnet und deren Wechselwirkung zueinander wirkt im Wesentlichen innerhalb der Bremsscheibenfläche und stabilisierend in dieser.

Vorzugsweise weisen mehrere Anschlagselemente und/oder Stützflächen der zumindest teilweisen Verbindung eines oder mehrere der voranstehend erläuterten Merkmale auf.

Hinsichtlich weiterer Ausgestaltungen der zumindest teilweisen Verbindung zwischen dem Montagering und dem Reibring wurden bislang keine näheren Angaben gemacht.

Bei besonders bevorzugten Ausführungsformen ist vorgesehen, dass die zumindest teilweise Verbindung zwischen dem Reibring und dem Montagering zumindest eine Drehmomentübertragungsfläche aufweist, an welcher bei einer ordnungsgemäßen Montage der Bremsscheibe an ein Rad eines Fahrzeugs bei einem Bremsvorgang, welcher insbesondere mittels des Bremssystems bewirkt wird, eine Drehmomentübertragung erfolgt.

Ein Vorteil dieser Lösung ist darin zu sehen, dass bei einem Bremsvorgang die Bremsdrehmomentübertragung durch die Drehmomentübertragung an der Drehmomentübertragungsfläche unterstützt wird, wobei insbesondere an der Drehmomentübertragungsfläche keine starre Verbindung besteht und günstiger Weise negative Beeinflussungen, beispielsweise Verzerrungen im Material und/oder eine thermische Last, welche während der Fahrt und/oder dem Bremsvorgang auftreten können, an der durch die Drehmomentübertragungsfläche vermittelten Verbindung zumindest erschwert übertragen werden.

Vorzugsweise weist die zumindest teilweise Verbindung mehrere Drehmomentübertragungsflächen auf, wobei insbesondere zumindest einige, beispielsweise sämtliche, der mehreren Drehmomentübertragungsflächen eines oder mehrere der nachfolgend erläuterten Merkmale aufweisen.

Insbesondere ist zumindest eine Drehmomentübertragungsfläche eine freie Endfläche eines Elements der Bremsscheibe. Insbesondere beseht an dieser freien Drehmomentübertragungsfläche kein Stoffschluss, sondern es erfolgt im Wesentlichen lediglich eine Kraftübertragung, beispielsweise durch ein an dieser freien Drehmomentübertragungsfläche anliegendes Anschlagelement der Bremsscheibe. Vorzugsweise erfolgt also so eine Kraftübertragung an der freien Drehmomentübertragungsfläche, jedoch ist beispielsweise ein Wärmewiderstand an dieser vergrößert und/oder Verschiebungen zwischen dieser freien Drehmomentübertragungsfläche und einem an dieser anliegendem Element ist ermöglicht, um eine Übertragung von Verspannungen oder Schwingungen zumindest zu reduzieren.

Insbesondere ist vorgesehen, dass zumindest ein Anschlagelement bei einer ordnungsgemäßen Montage der Bremsscheibe zumindest bei einem Bremsvorgang, bei welchem das auftretende Bremsdrehmoment einen Mindestdrehmomentschwellenwert übersteigt, kraftübertragend an einer Drehmomentübertragungsfläche anliegt. Insbesondere wird so in einer konstruktiv einfachen Weise erreicht, dass mittels des Anschlagelements zumindest ein Teil des Bremsdrehmoments über die Drehmomentübertragungsfläche bei dem Bremsvorgang übertragen wird, jedoch beispielsweise die Übertragung von Wärme und/oder Verspannungen zumindest reduziert ist.

Beispielsweise liegt das Anschlagelement auch ohne einwirkendes Bremsdrehmoment an der Drehmomentübertragungsfläche an. Insbesondere hat dies den Vorteil, dass gleich zu Beginn eines Bremsvorgangs und auch bei Bremsvorgänge mit sehr geringem Bremsdrehmoment eine zumindest teilweise Übertragung des Bremsdrehmoments zwischen dem Anschlagelement und der Drehmomentübertragungsfläche erfolgt.

Bei anderen vorteilhaften Ausführungsformen ist vorgesehen, dass das auftretende Bremsdrehmoment einen Mindestdrehmomentschwellenwert, der größer Null ist, übersteigen muss, bevor das Anschlagelement kraftübertragend an der Drehmomentübertragungsfläche anliegt und insbesondere ohne Einwirken eines Bremsdrehmoments das Anschlagelement zumindest ein wenig beabstandet von der Drehmomentübertragungsfläche ist. Beispielsweise hat dies den Vorteil, dass so eine Verbindung zwischen dem Anschlagelement und der Drehmomentübertragungsfläche unterbrochen ist sofern keine, Drehmomentübertragung erfolgt und dadurch wechselseitige Störeinflüsse zwischen dem Montagering und dem Bremsring weniger oder nicht übertragen werden.

Vorzugsweise ist vorgesehen, dass das Anschlagelement in einem Zustand ohne einwirkendem Bremsdrehmoment höchstens 1 mm, vorzugsweise höchstens 0,5 mm, beispielsweise höchstens 0,3 mm, von seiner korrespondierenden Drehmomentübertragungsfläche beabstandet ist, so dass der Mindestdrehmomentschwellenwert nicht zu groß ist und insbesondere zumindest bei den wesentlichen Bremsvorgängen eine Drehmomentübertragung erfolgt.

Beispielsweise hat das mit der Drehmomentübertragungsfläche drehmomentübertragend zusammenwirkende Anschlagelement keine korrespondierende Stützfläche, sondern ist speziell für eine gute Drehmomentübertragung entsprechend ausgebildet.

Bei anderen vorteilhaften Ausführungsformen ist vorgesehen, dass das mit der Drehmomentübertragungsfläche drehmomentübertragend zusammenwirkende Anschlagelement auch eine korrespondierende Stützfläche hat, so dass das Anschlagelement mehrere Funktionen erfüllt und insbesondere die voranstehend im Zusammenhang mit der Stützfläche erläuterten Vorteile verwirklicht.

Besonders bevorzugt ist es, wenn die Drehmomentübertragungsfläche sich zumindest näherungsweise senkrecht zu der auf die Bremsscheibenachse bezogene Umlaufrichtung erstreckt. Insbesondere wird hierdurch eine zumindest teilweise Übertragung des Bremsdrehmoments verbessert, da dieses im Wesentlichen in der Umlaufrichtung wirkt.

Hinsichtlich weiterer Ausgestaltungen der einen oder mehreren Stützflächen und der einen oder mehreren Drehmomentübertragungsflächen wurden bislang keine näheren Angaben gemacht.

Beispielsweise sind die Stützflächen und/oder die Drehmomentübertragungsflächen im Wesentlichen eben ausgebildet. Dies ist insbesondere konstruktiv einfach und damit kostengünstig zu realisieren und die im Wesentlichen ebenen Flächen eignen sich in günstiger Weise zur Kraftübertragung.

Bei einigen vorteilhaften Ausführungsformen ist vorgesehen, dass zumindest eine Stützfläche und/oder zumindest eine Drehmomentübertragungsfläche zumindest ein Anschlagelement bei einer Anlage desselben an zumindest einer dieser Flächen in zu einer axialen Richtung der Bremsscheibenachse zentrierend ausgeformt ist. Damit weist die Stützfläche und/oder die Drehmomentübertragungsfläche eine Form auf, durch welche ein anliegendes Anschlagelement in axialer Richtung zentriert wird. Insbesondere ist ein Vorteil hiervon, dass durch die Zentrierung des Anschlagelements in zur Bremsscheibenachse axialer Richtung ein zusätzlicher Halt in der axialen Richtung gegeben ist und somit zumindest das Risiko eines Ausscherens, beispielsweise des Reibrings, in axialer Richtung reduziert wird.

Beispielsweise weisen dann die axial zentrierend ausgeformten Flächen Flächenabschnitte auf, welche schräg zur axialen Richtung verlaufen und somit den zusätzlichen Halt in axialer Richtung geben.

Bei besonders günstigen Ausführungsformen ist vorgesehen, dass die Stützfläche und die Drehmomentübertragungsfläche für zumindest ein Anschlagelement durch eine gemeinsame Fläche ausgebildet werden. Dies hat beispielsweise den Vorteil, dass die Ausbildung insoweit konstruktiv einfacher ist, dass lediglich eine gemeinsame Fläche für die Funktionen der Stützfläche und Drehmomentübertragungsfläche erforderlich ist. Insbesondere wird dadurch auch erreicht, dass das Anschlagelement bereits in Anlage mit der Stützfläche liegt und bei einem auftretenden Bremsdrehmoment sogleich über die gemeinsame Fläche zumindest ein Teil des auftretenden Bremsdrehmoments übertragen wird.

Bei anderen vorteilhaften Ausführungsformen ist vorgesehen, dass die Stützfläche und die Drehmomentübertragungsfläche für zumindest ein Anschlagelement als einander gegenüberliegende Flächen ausgebildet sind. Insbesondere ist dabei vorgesehen, dass das zumindest eine Anschlagelement zwischen den beiden Flächen, also den einander gegenüberliegenden Stützfläche und Drehmomentübertragungsfläche, angeordnet ist. Beispielsweise ist ein Vorteil dieser Lösung, dass die Stützfläche und die Drehmomentübertragungsfläche jeweils für ihre Funktionen entsprechend speziell ausgebildet werden können. Vorzugsweise erhält das zwischen der Stützfläche und der Drehmomentübertragungsfläche angeordnete Anschlagelement durch die beidseits ausgebildeten Flächen auch einen zusätzlichen Halt.

Bei besonders günstigen Ausführungsformen ist vorgesehen, dass die zumindest teilweise Verbindung zumindest eine Aufnahme aufweist, insbesondere mehrere Aufnahmen aufweist. Insbesondere ist dabei jeweils einer Aufnahme ein Anschlagelement zugeordnet. Nachstehend ist unter dem Bezug auf zumindest eine Aufnahme insbesondere zu verstehen, dass das entsprechende Merkmal von der einen Aufnahme, von zumindest einer, vorzugsweise von einigen, beispielsweise von sämtlichen, der mehreren Aufnahmen realisiert wird, wobei vorteilhafterweise bei der einen Aufnahme, den einigen, insbesondere bei sämtlichen, der mehreren Aufnahmen eine Kombination von zumindest mehreren dieser Merkmale realisiert ist. Insbesondere ist vorgesehen, dass zumindest ein Anschlagelement in einer Aufnahme aufgenommen ist. Insbesondere ist die Aufnahme durch einen zumindest teilweise axialen Durchbruch in einem Aufnahmeabschnitt der Bremsscheibe ausgebildet.

Besonders günstig ist es, wenn die Aufnahme zumindest eine Fläche von der Stützfläche und der Drehmomentübertragungsfläche für das zumindest eine aufgenommene Anschlagelement ausbildet, vorzugsweise bildet die Aufnahme beide dieser Flächen aus. Insbesondere ist somit für das aufgenommene Anschlagelement ein wohl definierter Raum für die Herstellung einer zuverlässigen Verbindung gegeben, und durch die Ausbildung der Stützfläche und der Drehmomentübertragungsfläche in der Aufnahme ist eine konstruktiv einfache Realisierung für die zumindest teilweise Verbindung gegeben.

Beispielsweise ist bei einigen Ausführungsformen das Anschlagelement mit einem aufgenommenen Abschnitt in die Aufnahme eingepresst. Hierdurch wird dem Anschlagelement ein stabiler Halt gegeben und eine Kraftübertragung erfolgt vorzugsweise in einer zuverlässigen Weise.

Vorteilhaft ist es bei anderen Ausführungsformen, wenn ein Aufnahmeraum von zumindest einer Aufnahme zumindest etwas größer als ein von der Aufnahme aufgenommener Abschnitt eines Anschlagelements ausgebildet ist. Insbesondere bietet der Aufnahmeraum so einen Spielraum für das Anschlagelement, wobei insbesondere der Aufnahmeraum in zur Bremsscheibenachse radialer Richtung Spielraum für das Anschlagelement bietet. Besonders günstig ist daran, dass das Anschlagelement hierdurch einen zumindest gewissen Spielraum hat und dadurch beispielsweise bei thermisch bedingten Verzerrungen und/oder Verschiebungen in den Spielraum ausweichen kann und somit eine Übertragung von Störeinflüssen zwischen dem Anschlagelement und der Aufnahme und beispielsweise auch das Risiko des Tellerns der Bremsscheibe zumindest reduziert wird.

Hinsichtlich der Ausgestaltung des zumindest einen Anschlagelements, insbesondere der mehreren Anschlagelemente, wurden bislang keine detaillierteren Angaben gemacht.

Grundsätzlich können die Anschlagelemente in unterschiedlicher Weise ausgebildet sein und an unterschiedlichen Stellen der Bremsscheibe angeordnet sein.

Bei besonders bevorzugten Ausführungsformen ist vorgesehen, dass zumindest ein Anschlagelement an den Reibring angeordnet ist, insbesondere an diesen angeformt ist.

Insbesondere wird hierdurch erreicht, dass die zumindest teilweise Verbindung mit den voran genannten Vorteilen direkt am Reibring realisiert wird. Beispielsweise wird dadurch auch erreicht, dass Störeinflüsse im Reibring, beispielsweise eine thermische Last und/oder Schwingungen sich lediglich bis zu dem Anschlagelement ausbreiten und eine weitere Ausbreitung auf weitere Teile der Bremsscheibe zumindest reduziert wird. Insbesondere erhöht ein Anformen des Anschlagelements, insbesondere ein einstückiges Anformen die Stabilität zwischen dem Reibring und dem Anschlagelement.

Günstigerweise ist vorgesehen, dass zumindest ein Anschlagelement sich zumindest näherungsweise in zur Bremsscheibenachse radialer Richtung erstreckt und dabei insbesondere von dem Reibring sich radial inwärts hinweg erstreckt. Insbesondere wird hierdurch erreicht, dass das Anschlagelement sich in Richtung zu dem radial inwärts liegenden Montagering erstreckt, und somit eine möglichst kurze Verbindung erreicht wird, welche materialsparend ist. In günstiger Weise wird so auch ein Zwischenbereich zwischen dem Montagering und dem Reibring durch das Anschlagelement überbrückt.

Vorzugsweise weisen zumindest einige, beispielsweise sämtliche, der mehreren Anschlagelemente eines oder mehrere der voranstehend erläuterten Merkmale auf.

Hinsichtlich weiterer Ausgestaltungen und Ausbildungen der zumindest teilweisen Verbindung wurden noch keine weiteren detaillierten Angaben gemacht.

Bei besonders bevorzugten Ausführungsformen ist vorgesehen, dass die Vorspannung für die zumindest teilweise Verbindung durch eine thermische Behandlung induziert wird. Insbesondere ist dabei vorgesehen, dass durch einen mittels der thermischen Behandlung induzierten Verzug in einem Material der Bremsscheibe die Vorspannung für die zumindest teilweise Verbindung bereitgestellt ist.

Dabei umfasst die thermische Behandlung insbesondere ein Erwärmen zumindest eines Teils des Materials der Bremsscheibe und ein darauffolgendes Abkühlen desselben. Insbesondere erfolgt dies derartig, dass der Materialteil sich bei dem Abkühlen irreversibel setzt und dadurch in einen von einem Anfangszustand vor dem Erwärmen unterschiedlichen Endzustand gelangt.

Beispielsweise ist ein Vorteil hiervon, dass ein Bremsscheibenrohling für die Bremsscheibe aus einem Rohmaterial hergestellt werden kann und die Vorspannung durch die thermische Behandlung in einfacher Weise induziert wird. Insbesondere erfolgt die Erwärmung durch Induktionserhitzen, mittels welches gezielt einzelne Stellen der Bremsscheibe in wohldefinierter Weise erwärmt werden können.

Insbesondere erfolgt die thermische Behandlung zumindest teilweise, beispielsweise zumindest größtenteils, an dem Reibring.

Bei besonders vorteilhaften Ausführungsformen ist vorgesehen, dass der Reibring gehärtet ist. Insbesondere ist der Reibring thermisch gehärtet, beispielsweise induktionsgehärtet.

Insbesondere ist ein Vorteil hiervon, dass der Reibring für die Anforderungen für das bremsende Zusammenwirken besser ausgebildet ist. Besonders günstig ist es, wenn mittels der thermischen Behandlung zum einen der Reibring gehärtet wird und zum anderen der Verzug für die Bereitstellung der Vorspannung induziert wird, so dass hierfür lediglich ein Fertigungsschritt erforderlich ist.

Bei besonders vorteilhaften Ausführungsformen umfasst die Bremsscheibe zumindest einen Tragesteg, insbesondere mehrere Tragestege.

Im Folgenden ist die Bezugnahme auf einen Tragesteg als Bezugnahme auf den einen Tragesteg oder auf zumindest einen, vorzugsweise einige, beispielsweise sämtliche, der mehreren Tragestege zu verstehen. Insbesondere ist vorgesehen, dass zumindest einige der mehreren Tragestege mehrere der nachfolgend erläuterten Merkmale in Kombination aufweisen.

Insbesondere trägt zumindest ein Tragesteg den Reibring. Insbesondere wird hierdurch ein in Position halten des Reibrings, welches insbesondere auch zumindest teilweise durch die teilweise Verbindung erfolgt, durch die Tragestege zumindest unterstützt.

Beispielsweise reichen wegen der zumindest teilweisen Verbindung wenige Tragestege aus, wodurch insbesondere das Risiko des Tellerns zumindest reduziert wird.

Vorzugsweise ist vorgesehen, dass zumindest ein Tragesteg an den Reibring angeformt ist, wodurch insbesondere eine konstruktiv einfache und stabile Realisierung des Reibrings mit einem oder mehreren Tragestegen in einer stabilen Ausführung ermöglicht wird.

Besonders vorteilhaft ist es, wenn zumindest ein Tragesteg wegen einer thermischen Behandlung, insbesondere eines wie voranstehend erläuterten Erwärmens und Abkühlens, einen Verzug aufweist und vorzugsweise eine innere Spannung aufweist. Insbesondere weist dabei also der eine Tragesteg oder weisen zumindest einige Tragestege Materialanteile auf, die irreversibel verzogen sind. Ein Vorteil ist darin zu sehen, dass die dadurch bereitgestellte Vorspannung und/oder eine durch die Spannung bereitgestellte Presskraft für die voranstehend in diesem Zusammenhang erläuterten Merkmale der zumindest teilweisen Verbindung genutzt werden können.

Bei besonders bevorzugten Ausführungsformen ist vorgesehen, dass zumindest ein Tragesteg eine Vorspannung für die zumindest teilweise Verbindung erzeugt. Somit sorgt der eine Tragesteg oder sorgen zumindest einige der Tragestege für die Vorspannung und/oder Kraftbeaufschlagung und/oder das Anpressen in der zumindest teilweisen Verbindung, wie insbesondere voranstehend erläutert. Ein Vorteil hiervon ist beispielsweise darin zu sehen, dass die Tragestege gezielt für ihre Funktion ausgestaltet werden können. Besonders vorteilhaft ist es dabei, wenn durch diese Vorspannung zumindest ein Anschlagelement an seine Stützfläche gepresst wird.

Besonders günstig ist es, wenn zumindest ein Tragesteg derart ausgebildet ist, dass bei einem Verzug des zumindest einen Tragestegs der Reibring in der Umlaufrichtung um die Bremsscheibenachse zumindest ein kleines Stück verdreht wird. Beispielsweise ist dies vorteilhaft, da durch den Verzug des zumindest einen Tragestegs, also eines Tragestegs oder zumindest einiger der mehreren Tragestege, der Reibring zumindest im Wesentlichen in einer zu der Bremsscheibenachse zumindest näherungsweise senkrecht verlaufenden Ebene verbleibt und durch die Verdrehung beispielsweise eine Kraftbeaufschlagung, insbesondere wie voranstehend erläutert, realisiert werden kann und so hierdurch mittels der zumindest teilweisen Verbindung ein zusätzlicher Halt für den Reibring gegeben wird. Insbesondere ist eine derartige Ausbildung auch vorteilhaft, da hierdurch die Tragestege zumindest teilweise Verzerrungen durch die bei einem Bremsvorgang auftretende thermische Last aufnehmen können und ein Risiko, dass der Reibring in zur Bremsscheibenachse axialer Richtung ausschert zumindest reduziert wird.

Besonders günstig ist es, wenn zumindest ein Tragesteg schräg zur radialen Richtung der Bremsscheibenachse radial inwärts verlaufend ausgebildet ist. Insbesondere ist dabei vorgesehen, dass eine Längserstreckung des einen Tragesteges und/oder zumindest einiger der mehreren Tragestege mit der zur Bremsscheibenachse radialen Richtung einen Winkel einschließen, welcher insbesondere kleiner als 80°, vorzugsweise kleiner als 70° ist und/oder größer als 20°, vorzugsweise größer als 40° ist.

Besonders günstig ist es, wenn der zumindest eine Tragesteg zumindest leicht gekrümmt verlaufend ausgebildet ist.

Beispielsweise ist ein Vorteil hiervon, dass durch eine derartige Bauweise eine von dem Reibring sich ausbreitenden thermische Last von den Tragestegen besonders günstig aufgenommen werden kann. Insbesondere wird durch eine derartige Ausgestaltung erreicht, dass bei einer Ausdehnung durch eine Erwärmung des Reibrings dieser im Wesentlichen in einer zur Bremsscheibenachse zumindest näherungsweise senkrecht verlaufenden Ebene verbleibt und vorzugsweise um die Bremsscheibenachse verdreht wird.

Insbesondere wird bei einer Ausgestaltung der Tragestege mit einem oder mehreren der erläuterten Merkmale ein Risiko des Tellerns der Bremsscheibe zumindest reduziert.

Bei einigen bevorzugten Ausführungsformen ist vorgesehen, dass zumindest ein Tragesteg mit zunehmender Erstreckung in einer vorgesehenen Laufrichtung eines Rades sich zunehmend von dem Reibring radial inwärts entfernend ausgebildet ist. Somit erstreckt sich der eine Tragesteg oder erstrecken sich zumindest einige der Tragestege im Wesentlichen in eine Richtung einer Längserstreckung und mit zunehmender Erstreckung von dem Reibring hinweg verlaufen diese Tragestege schräg radial inwärts in Richtung der radial vorgesehenen Laufrichtung, so dass mit zunehmender Erstreckung in Richtung der Laufrichtung sich ein Abstand zwischen dem jeweiligen Tragesteg und dem Reibring vergrößert. Beispielsweise ist ein Vorteil einer derartigen Ausbildung darin zu sehen, dass mit den derartigen Tragestegen, wenn diese eine Vorspannung ausüben, in einfacher Weise der Reibring und insbesondere damit auch die Anschlagelemente in entgegengesetzte Richtung zu der Laufrichtung Kraft beaufschlagt werden und so die Anschlagelemente an ihre Drehmomentübertragungsflächen angepresst werden können.

Bei anderen besonders vorteilhaften Ausführungsformen ist vorgesehen, dass zumindest ein Tragesteg mit zunehmender Erstreckung in eine zu einer vorgesehenen Laufrichtung eines Rades entgegengesetzten Richtung sich zunehmend von dem Reibring radial inwärts entfernend ausgebildet ist. Somit ist insbesondere bei dieser Ausführungsform vorgesehen, dass der eine Tragesteg oder zumindest einige der mehreren Tragestege sich in eine Richtung längs erstrecken und mit zunehmender Erstreckung in diese Richtung radial inwärts verlaufen, wobei mit zunehmender Erstreckung in die zur vorgesehenen Laufrichtung entgegengesetzte Richtung ein Abstand zwischen dem jeweiligen Tragesteg und dem Reibring sich vergrößert. Beispielsweise ist ein Vorteil dieser Ausgestaltung darin zu sehen, dass diese Tragestege bei einem Bremsvorgang durch das dabei bewirkte Bremsdrehmoment, welches entgegengesetzt zu der Laufrichtung wirkt, auf Druck belastet werden.

Bei einigen bevorzugten Ausführungsformen ist vorgesehen, dass zumindest ein Tragesteg bei einer ordnungsgemäßen Montage der Bremsscheibe bei einem Bremsvorgang insbesondere durch das dabei auftretende Bremsdrehmoment, welches entgegengesetzt zu der Laufrichtung wirkt, auf Zug belastet wird.

Bei einigen bevorzugten Ausführungsformen ist vorgesehen, dass zumindest ein Tragesteg bei einer ordnungsgemäßen Montage der Bremsscheibe bei einem Bremsvorgang, insbesondere durch das dabei auftretende Bremsdrehmoment, auf Druck belastet wird. Ein Vorteil ist insbesondere darin zu sehen, dass dadurch der eine Tragesteg oder zumindest einige der Tragestege gegenüber einer auf Zugbelastung besser standhalten und somit gegenüber anderen Ausbildungen bei in Wesentlicher gleicher Belastung Material sparender ausgebildet werden können.

Insbesondere ist vorgesehen, dass radial inwärts an den Reibring ein freier Ringbereich direkt anschließt. Dabei ist insbesondere vorgesehen, dass der freie Ringbereich im Wesentlichen materialfrei ist.

Vorzugsweise ist vorgesehen, dass die zumindest teilweise Verbindung im Wesentlichen in dem freien Ringbereich ausgebildet ist. Besonders vorteilhaft ist es, wenn sich in dem freien Ringbereich die Anschlagelemente und ihre korrespondierenden Stützflächen und gegebenenfalls die Drehmomentübertragungsflächen hinein erstrecken.

Beispielsweise ist ein Vorteil hiervon darin zu sehen, dass der bei einem Bremsvorgang einer großen thermischen Last ausgesetzte Reibring im Wesentlichen eine materialfreie Umgebung hat für eine bessere Kühlung und so beispielsweise die Ausbreitung von Störeinflüssen durch die thermische Last auf weitere Teile der Bremsscheibe zumindest reduziert wird.

Besonders vorteilhaft ist es, wenn die Tragestege den freien Ringbereich überbrücken. Insbesondere erstrecken sich dabei die Tragestege von dem Reibring radial inwärts durch den freien Ringbereich hindurch. Insbesondere ist ein Vorteil hiervon, dass hierdurch die Tragestege der insbesondere im freien Ringbereich ausgebildeten zumindest teilweisen Verbindung beim Tragen des Reibrings unterstützen.

Besonders bevorzugst ist es, wenn ansonsten kein weiteres Material der Bremsscheibe in dem freien Ringbereich angeordnet ist.

Bei günstigen Ausführungsformen ist vorgesehen, dass in der Umlaufrichtung um die Bremsscheibenachse die Tragestege und die Anschlagelemente alternierend angeordnet sind.

Hinsichtlich weiterer Details des Reibrings wurden bislang keine weiteren Angaben gemacht.

Besonders günstig ist es, wenn der Reibring entlang seiner Erstreckung in der auf die Bremsscheibenachse bezogene Umlaufrichtung in zur Bremsscheibenachse radialer Richtung variierend ausgebildet ist. Insbesondere wird hierdurch erreicht, dass beispielsweise Bremsbacken, welche mit dem Reibring zusammenwirken an unterschiedlichen Stellen belastet werden und somit langlebiger einsetzbar sind.

Beispielsweise ist die radial variierende Ausbildung des Reibrings durch zumindest eine variierende radiale Breite des Reibring realisiert. Alternativ oder ergänzend ist insbesondere vorgesehen, dass die radial variierende Ausbildung durch einen variierenden Innendurchmesser und/oder einen variierenden Außendurchmesser des Reibrings ausgebildet wird.

Hinsichtlich weiterer Ausgestaltungen der Bremsscheibe wurden bislang keine näheren Angaben gemacht.

Vorzugsweise ist vorgesehen, dass die Bremsscheibe einen Zwischenringabschnitt aufweist.

Der Zwischenringabschnitt ist in zur Bremsscheibenachse radialer Richtung radial zwischen dem Reibring und dem Montagering angeordnet ist. Beispielsweise ist durch den Zwischenringabschnitt eine weitere thermische Trennung von dem Reibring und dem Montagering ermöglicht.

Insbesondere erstreckt sich der freie Ringbereich radial zwischen dem Reibring und dem Zwischenringabschnitt und wird insbesondere radial beidseitig von diesen begrenzt.

Vorzugsweise ist vorgesehen, dass der Zwischenringabschnitt zumindest eine Aufnahme aufweist. Vorzugsweise ist somit die eine oder zumindest einige der mehreren Aufnahmen in der Nähe zum Reibring angeordnet. Vorzugsweise ist vorgesehen, dass sich der Aufnahmeraum der einen oder zumindest einiger der mehreren Aufnahmen radial in den freien Ringbereich hinein öffnen.

Bei bevorzugten Ausführungsformen ist vorgesehen, dass zumindest ein Tragesteg an den Zwischenringabschnitt angeordnet, vorzugsweise angeformt ist. Insbesondere überbrückt somit der eine Tragesteg oder überbrücken zumindest einige der mehreren Tragestege so den freien Ringbereich.

Grundsätzlich kann der Zwischenringabschnitt in unterschiedlichsten Weisen ausgebildet sein.

Besonders günstig ist es, wenn der Zwischenringabschnitt Verstrebungen umfasst und insbesondere im Wesentlichen lediglich aus Verstrebungen ausgebildet ist. Insbesondere ist der Zwischenringabschnitt aus den Verstrebungen fachwerkartig ausgebildet.

Insbesondere ist ein Vorteil hiervon, dass die Verstrebungen den Zwischenringabschnitt Stabilität verleihen und durch eine geschickte Anordnung der Verstrebungen beispielsweise ein Ausbreiten von Störeinflüssen zwischen dem Reibring und Montagering zumindest reduziert werden kann.

Beispielsweise ist die Bremsscheibe aus mehreren Teilen mehrstückig ausgebildet. Insbesondere ist ein Vorteil hiervon, dass die mehreren Teile entsprechend ihren Anforderungen speziell ausgestaltet und ausgebildet werden können.

Bei einigen vorteilhaften Ausführungsformen ist vorgesehen, dass der Zwischenringabschnitt zumindest mit dem Reibring und/oder dem Montagering einstückig ausgebildet ist. Hiervon ist beispielweise ein Vorteil, dass durch die einstückige Ausbildung die Bremsscheibe mehr Stabilität erlangt und beispielsweise eine einfachere Herstellung derselben ermöglicht wird.

Bei einigen vorteilhaften Ausführungsformen ist vorgesehen, dass der Reibring und der Montagering einstückig ausgebildet sind.

Bei einigen besonders vorteilhaften Ausführungsformen ist die Bremsscheibe im Gesamten einstückig ausgebildet.

Insbesondere werden zumindest Teile der Bremsscheibe, vorzugsweise die gesamt Bremsscheibe aus einem Rohmaterial herausgeschnitten, insbesondere mittels Laserschneiden und/oder Wasserstahlschneiden.

Bei einigen bevorzugten Ausführungsformen ist vorgesehen, dass zumindest Teile der Bremsscheibe, insbesondere die gesamte Bremsscheibe, aus einem Rohmaterial ausgestanzt ist.

Insbesondere sind zumindest Teile der Bremsscheibe insbesondere der Reibring und/oder der Montagering und/oder der Zwischenringabschnitt, und vorzugsweise die gesamte Bremsscheibe aus einem metallischen Werkstoff, insbesondere einem Edelstahl umfassenden Werkstoff ausgebildet.

Hinsichtlich weiteren Ausbildungen des Montagerings wurden bislang keine näheren Angaben gemacht.

Insbesondere weist der Montagering mehrere Befestigungslöcher, insbesondere Schraubenlöcher für die Befestigung an einem Rad, insbesondere an dessen Nabe auf.

Bei anderen günstigen Ausführungsformen ist vorgesehen, dass der Montagering zumindest einen gezahnten Montageabschnitt aufweist für die Befestigung an einem Rad, insbesondere an dessen Nabe.

Hinsichtlich von weiteren Ausgestaltung des Bremssystems wurden bislang keine weiteren Angaben gemacht.

Insbesondere umfasst das Bremssystem eine Betätigungseinrichtung, beispielsweise mit einer Bremszange, mittels welcher bei einer Betätigung derselben im Zusammenwirken mit dem Reibring eine Bremswirkung erzielt wird.

Insbesondere umfasst das Bremssystem auch eine Radeinheit, welche eine Radaufhängung und ein an die Radaufhängung um eine Drehachse drehbar angeordnetes Rad umfasst. Dabei ist die Bremsscheibe an das Rad, insbesondere mittels des Montagerings montiert.

Alternativ und ergänzend wird die voranstehend genannte Aufgabe auch durch einen Bremsscheibenrohling mit einem Reibring gelöst, wobei der Bremsscheibenrohling derart ausgebildet ist, dass zumindest nach einer noch vorzunehmenden Schlussbehandlung der Bremsscheibenrohling eine Verbindung für den Reibring, insbesondere mit einem Montagering, mit einem oder vorzugsweise mehreren der voranstehend erläuterten Merkmale ausbildet.

Insbesondere ist der Bremsscheibenrohling insofern gefertigt, dass lediglich noch die zumindest teilweise Verbindung mit insbesondere einem oder mehreren der voranstehend erläuterten Merkmale fertig gestellt werden muss.

Insbesondere ist die noch erforderliche Schlussbehandlung eine thermische Behandlung, insbesondere ein Erwärmen und Abkühlen, zumindest eines Teils des Bremsscheibenrohlings, insbesondere des Reibrings und zumindest Teile der Tragestege.

Insbesondere ist mittels der Schlussbehandlung noch die Vorspannung und/oder Kraftbeaufschlagung in den Bremsscheibenrohling zur Fertigstellung der Bremsscheibe erforderlich.

Bei einigen günstigen Ausführungsformen ist vorgesehen, dass bei dem Bremsscheibenrohling zwischen zumindest einem Anschlagelement und zumindest dessen Stützfläche und/oder dessen Drehmomentübertragungsfläche ein Spalt ausgebildet ist. Beispielsweise ist dieser Spalt höchstens 1mm, vorzugsweise höchstens 0,5mm, insbesondere höchstens 0,3mm breit.

Insbesondere wird durch die Schlussbehandlung der Spalt zwischen dem Anschlagelement und der Stützfläche, beispielsweise durch induzieren einer Vorspannung und unter Kraftbeaufschlagung, zumindest verkleinert oder gar entfernt und das Anschlagelement an die Stützfläche angelegt.

Dabei kann die erforderliche Schlussbehandlung bereits bei der Fertigung erfolgen. Ein Vorteil hiervon ist, dass die dann fertig gestellte Bremsscheibe bereits die ausgebildete zumindest teilweise Verbindung mit einen oder mehreren der voranstehend erläuterten Merkmale aufweist.

Bei anderen vorteilhaften Ausführungsformen ist vorgesehen, dass die noch erforderliche Schlussbehandlung, welche insbesondere eine thermische Behandlung ist, im Betrieb der Bremsscheibe erfolgt und insbesondere dadurch, dass bei einem Bremsvorgang die dabei erzeugte thermische Last die erforderliche Schlussbehandlung darstellt und die zumindest teilweise Verbindung mit einem oder mehreren der voranstehend erläuterten Merkmale ausbildet.

Somit kann in dieser Weise der Bremsscheibenrohling auch als Bremsscheibe selbst gesehen werden.

Entsprechend wird die voranstehend genannte Aufgabe erfindungsgemäß auch durch ein Bremssystem gelöst, welches ein Bremsscheibenrohling, wie erläutert, umfasst, wobei der Bremsscheibenrohling als Bremsscheibe ausgebildet ist und eine bei einem noch zu erfolgenden Bremsvorgang erzeugte thermische Last auf den Reibring als Schlussbehandlung ausreichend ist für die Ausbildung der zumindest teilweisen Verbindung mit einem oder mehreren der voranstehend erläuterten Merkmale.

Insbesondere ist bevorzugt vorgesehen, dass ein derartiges Bremssystem auch eine Radeinheit umfasst, welche eine Radaufhängung und ein an die Radaufhängung drehbar um eine Drehachse angeordnetes Rad umfasst, wobei an das Rad der Bremsscheibenrohling als Bremsscheibe angeordnet ist.

Alternativ oder ergänzend wird die voranstehend genannten Aufgabe auch durch ein Fahrzeug gelöst, welches ein Bremssystem mit einem oder mehreren der voranstehend genannten Merkmale umfasst.

Insbesondere ist dabei das Fahrzeug ein lenkergeführtes Fahrzeug.

Bei einigen bevorzugten Ausführungsformen ist dabei vorgesehen, dass das Fahrzeug ein zumindest teilweise von der Muskelkraft des Fahrers angetriebenes Fahrzeug ist. Hierfür umfasst insbesondere das Fahrzeug ein Antriebssystem welches zur Antreibung durch die Muskelkraft des Fahrers ausgebildet ist.

Voranstehend und nachfolgend ist unter der Formulierung "zumindest näherungsweise" im Zusammenhang mit einer technischen Angabe zu verstehen, dass technisch bedingte und/oder technisch nicht relevante Abweichungen von der Angabe mit umfasst sind. Insbesondere sind Abweichungen von bis zu +/- 20%, insbesondere von bis zu +/- 10% vorzugsweise von bis zu +/- 5% von der angegebenen Angabe, insbesondere einem angegebenen Wert, mit umfasst. Bei Angaben von Richtungen sind insbesondere Abweichungen von bis zu 20°, insbesondere von bis zu 10°, beispielsweise von bis zu 5° mit umfasst.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Bremssystem (100) für ein Fahrzeug (110), insbesondere ein lenkergeführtes Fahrzeug (110), umfassend eine Bremsscheibe (210, 210', 210a, 210'a) mit einem Reibring (222) und einem Montagering (224), wobei der Reibring (222) und der Montagering (224) zumindest teilweise durch eine Verbindung (250), die kraft- und/oder formschlüssig aber nicht stoffschlüssig ist, miteinander verbunden sind.
2. Bremssystem (100) nach dem Oberbegriff der Ausführungsform 1 oder nach Ausführungsform 1, wobei der Reibring (222) und der Montagering (224) zumindest teilweise über eine unter Vorspannung stehende Verbindung (250) miteinander verbunden sind.
3. Bremssystem (100) nach dem Oberbegriff der Ausführungsform 1 oder nach einer der voranstehenden Ausführungsformen, wobei der Reibring (222) und der Montagering (224) zumindest teilweise durch eine Verbindung (250) verbunden sind, wobei die Verbindung (250) zumindest eine Stützfläche (254, 254a) und zumindest ein Anschlagelement (252, 252a), welches zumindest in Reibkontakt mit der Stützfläche (254, 254a) steht, umfasst.
4. Bremssystem (100) nach einer der voranstehenden Ausführungsformen, wobei die zumindest teilweise Verbindung (250) zumindest eine Stützfläche (254, 254a) und zumindest ein Anschlagelement (252, 252a), welches an die zumindest eine Stützfläche (254, 254a) angepresst ist, insbesondere in einer auf eine Bremsscheibenachse (228) bezogene Umlaufrichtung (262) angepresst ist, umfasst.
5. Bremssystem (100) nach einer der voranstehenden Ausführungsformen, wobei die zumindest teilweise Verbindung (250) zumindest eine Stützfläche (254, 254a) und zumindest ein Anschlagelement (252, 252a), welches sich an der zumindest einen Stützfläche (254, 254a) abstützt, insbesondere kraftbeaufschlagt abstützt, umfasst.
6. Bremssystem (100) nach einer der voranstehenden Ausführungsformen, wobei zumindest eine Stützfläche (254, 254a) sich zumindest näherungsweise senkrecht zu der auf die Bremsscheibenachse (228) bezogenen Umlaufrichtung (262) erstreckt.
7. Bremssystem (100) nach einer der voranstehenden Ausführungsformen, wobei die zumindest teilweise Verbindung (250) zumindest eine Drehmomentübertragungsfläche (298, 298a) aufweist, an welcher bei einer ordnungsgemäßen Montage der Bremsscheibe (210, 210', 210a, 210'a) an ein Rad (124, 126) eines Fahrzeugs (110) bei einem Bremsvorgang eine Drehmomentübertragung erfolgt.
8. Bremssystem (100) nach der voranstehenden Ausführungsform, wobei zumindest ein Anschlagelement (252, 252a) bei einer ordnungsgemäßen Montage der Bremsscheibe (210, 210', 210a, 210'a) zumindest bei einem Bremsvorgang, bei welchem das auftretende Bremsdrehmoment einen Mindestdrehmomentsschwellenwert übersteigt, kraftübertragend an der Drehmomentübertragungsfläche (298, 298a) anliegt.
9. Bremssystem (100) nach einer der beiden voranstehenden Ausführungsformen, wobei zumindest eine Drehmomentübertragungsfläche (298, 298a) sich zumindest näherungsweise senkrecht zu der auf die Bremsscheibenachse (228) bezogene Umlaufrichtung (262) erstreckt.
10. Bremssystem (100) nach einer der voranstehenden Ausführungsformen, wobei zumindest eine Stützfläche (254, 254a) und/oder zumindest eine Drehmomentübertragungsfläche (298, 298a) zumindest ein Anschlagelement (252, 252a) bei einer Anlage desselben an zumindest eine dieser Flächen in zu einer axialen Richtung der Bremsscheibenachse (228) zentrierend ausgeformt ist.
11. Bremssystem (100) nach einer der voranstehenden Ausführungsformen, wobei die Stützfläche (254, 254a) und die Drehmomentübertragungsfläche (298, 298a) für zumindest ein Anschlagelement (252, 252a) durch eine gemeinsame Fläche (252, 252a, 298, 298a) ausgebildet werden.
12. Bremssystem (100) nach einer der voranstehenden Ausführungsformen, wobei die Stützfläche (254, 254a) und die Drehmomentübertragungsfläche (298, 298a) für zumindest ein Anschlagelement (252, 252a) als einander gegenüberliegende Flächen ausgebildet sind und dass insbesondere das zumindest eine Anschlagelement (252, 252a) zwischen den beiden Flächen (254, 254a, 298, 298a) angeordnet ist.
13. Bremssystem (100) nach einer der voranstehenden Ausführungsformen, wobei zumindest ein Anschlagelement (252, 252a) in einer Aufnahme (272) aufgenommen ist, wobei insbesondere die Aufnahme (272) zumindest eine Fläche von der Stützfläche (254, 254a) und der Drehmomentübertragungsfläche (298, 298a) für das zumindest eine Anschlagelement (252, 252a) ausbildet.
14. Bremssystem (100) nach einer der voranstehenden Ausführungsformen, wobei ein Aufnahmeraum (274) von zumindest einer Aufnahme (272) größer als ein von der Aufnahme (272) aufgenommener Abschnitt eines Anschlagelements (252, 252a) ausgebildet ist, so dass insbesondere der Aufnahmeraum (274) Spielraum für das Anschlagelement (252, 252a) bietet, wobei insbesondere der Aufnahmeraum (274) in zur Bremsscheibenachse (228) radialer Richtung Spielraum für das Anschlagselement (252, 252a) bietet.
15. Bremssystem (100) nach einer der voranstehenden Ausführungsformen, wobei zumindest ein Anschlagelement (252, 252a) an den Reibring (222) angeformt ist.
16. Bremssystem (100) nach einer der voranstehenden Ausführungsformen, wobei zumindest ein Anschlagselement (252, 252a) sich zumindest näherungsweise in zur Bremsscheibenachse (228) radialer Richtung erstreckt und zwar insbesondere von dem Reibring (222) radial inwärts hinweg erstreckt.
17. Bremssystem (100) nach einer der voranstehenden Ausführungsformen, wobei die Vorspannung für die zumindest teilweise Verbindung (250) durch einen mittels einer thermischen Behandlung induzierten Verzug in einem Material der Bremsscheibe (210, 210', 210a, 210'a) bereitgestellt ist.
18. Bremssystem (100) nach einer der voranstehenden Ausführungsformen, wobei der Reibring (222) gehärtet ist, insbesondere thermisch gehärtet ist.
19. Bremssystem (100) nach einer der voranstehenden Ausführungsformen, wobei die Bremsscheibe (210, 210', 210a, 210'a) zumindest einen Tragesteg (312) umfasst, welcher insbesondere den Reibring (222) trägt und welcher insbesondere an den Reibring (222) angeformt ist.
20. Bremssystem (100) nach einer der voranstehenden Ausführungsformen, wobei zumindest ein Tragesteg (312) wegen einer thermischen Behandlung einen Verzug aufweist.
21. Bremssystem (100) nach einer der voranstehenden Ausführungsformen, wobei zumindest ein Tragesteg (312) eine Vorspannung für die zumindest teilweise Verbindung (250) erzeugt, wobei insbesondere durch diese Vorspannung zumindest ein Anschlagelement (252, 252a) an dessen Stützfläche (254, 254a) gepresst wird.
22. Bremssystem (100) nach einer der voranstehenden Ausführungsformen, wobei zumindest ein Tragesteg (312) derart ausgebildet ist, dass bei einem Verzug des zumindest einen Tragesteges (312) der Reibring (222) in der Umlaufrichtung (262) um die Bremsscheibenachse (228) zumindest ein kleines Stück verdreht wird.
23. Bremssystem (100) nach einer der voranstehenden Ausführungsformen, wobei zumindest ein Tragesteg (312) schräg zur radialen Richtung der Bremsscheibenachse (228) radial inwärts, insbesondere gekrümmt, verlaufend ausgebildet ist.
24. Bremssystem (100) nach einer der voranstehenden Ausführungsformen, wobei zumindest ein Tragesteg (312) mit zunehmender Erstreckung in eine zu einer vorgesehenen Laufrichtung (128) eines Rades (124, 128) entgegengesetzten Richtung sich zunehmend von dem Reibring (222) radial inwärts entfernend ausgebildet ist.
25. Bremssystem (100) nach einer der voranstehenden Ausführungsformen, wobei zumindest ein Tragesteg (312) bei einer ordnungsgemäßen Montage der Bremsscheibe (210, 210', 210a, 210'a) bei einem Bremsvorgang auf Druck belastet wird.
26. Bremssystem (100) nach einer der voranstehenden Ausführungsformen, wobei der Reibring (222) entlang seiner Erstreckung in der auf die Bremsscheibenachse (228) bezogene Umlaufrichtung (262) in zur Bremsscheibenachse (228) radialer Richtung variierend ausgebildet ist, wobei insbesondere die radial variierende Ausbildung durch zumindest eine variierende radiale Breite und/oder einen variierenden Innendurchmesser und/oder einen variierenden Außendurchmesser des Reibrings (222) ausgebildet wird.
27. Bremssystem (100) nach einer der voranstehenden Ausführungsformen, wobei die Bremsscheibe (210, 210', 210a, 210'a) einen Zwischenringabschnitt (236) aufweist, welcher in zur Bremsscheibenachse (228) radialer Richtung radial zwischen dem Reibring (222) und dem Montagering (224) angeordnet ist.
28. Bremssystem (100) nach einer der voranstehenden Ausführungsformen, wobei der Zwischenringabschnitt (236) zumindest eine Aufnahme (272) aufweist.
29. Bremssystem (100) nach einer der voranstehenden Ausführungsformen, wobei an den Zwischenringabschnitt (236) zumindest ein Tragesteg (312) angeformt ist.
30. Bremssystem (100) nach einer der voranstehenden Ausführungsformen, wobei der Zwischenringabschnitt (236) Verstrebungen (354, 356) umfasst und insbesondere fachwerkartig ausgebildet ist.
31. Bremssystem (100) nach einer der voranstehenden Ausführungsformen, wobei der Zwischenringabschnitt (236) zumindest mit dem Reibring (222) und/oder mit dem Montagering (224) einstückig ausgebildet ist.
32. Bremssystem (100) nach einer der voranstehenden Ausführungsformen, wobei der Reibring (222) und der Montagering (224) einstückig ausgebildet sind.
33. Bremssystem (100) nach einer der voranstehenden Ausführungsformen, wobei der Montagering (224) mehrere Befestigungslöcher (244) und/oder zumindest einen gezahnten Montageabschnitt aufweist.
34. Bremssystem (100) nach einer der voranstehenden Ausführungsformen, umfassend eine Radeinheit, welche eine Radaufhängung (114, 116) und ein an die Radaufhängung (114, 116) drehbar angeordnetes Rad (124, 126) umfasst, wobei an das Rad (124, 126) die Bremsscheibe montiert ist.
35. Bremsscheibenrohling (410, 410a) mit einem Reibring (222), der derart ausgebildet ist, dass zumindest nach einer noch vorzunehmenden Schlussbehandlung, insbesondere nach einer thermischen Behandlung, der Bremsscheibenrohling (410, 410a) eine Verbindung (250) für den Reibring (222) gemäß einer der voranstehenden Ausführungsformen ausbildet.
36. Bremsscheibenrohling (410, 410a) nach der voranstehenden Ausführungsform, wobei zwischen zumindest einem Anschlagselement (252, 252a) und zumindest dessen Stützfläche (254, 254a) und/oder dessen Drehmomentübertragungsfläche (298, 298a) ein Spalt ausgebildet ist.
37. Bremssystem (100) umfassend einen Bremsscheibenrohling (410, 410a), welcher nach einer der voranstehenden auf einen Bremsscheibenrohling gerichteten Ausführungsformen ausgebildet ist, wobei der Bremsscheibenrohling (410, 410a) als Bremsscheibe (210, 210', 210a, 210'a) ausgebildet ist und eine bei einem noch zu erfolgenden Bremsvorgang erzeugt thermische Last auf den Reibring (222) als Schlussbehandlung ausreichend ist für die Ausbildung der zumindest teilweisen Verbindung (250) gemäß einer der voranstehenden auf eine Bremsscheibe gerichteten Ausführungsformen.
38. Bremssystem (100) umfassend eine Radeinheit, welche eine Radaufhängung (114, 116) und ein an die Radaufhängung (114, 116) drehbar angeordnetes Rad (124, 126) umfasst, wobei an das Rad (124, 126) ein als Bremsscheibe ausgebildeter Bremsscheibenrohling (410, 410a) gemäß einer der voranstehenden Ausführungsformen montiert ist.
39. Fahrzeug (110) gekennzeichnet durch ein Bremssystem (100) nach einer der voranstehenden Ausführungsformen.

Weitere Merkmale und Vorteile der erfindungsgemäßen Lösung sind Gegenstand der nachfolgenden Beschreibung sowie der zeichnerischen Darstellung einiger Ausführungsbeispiele:
In der Zeichnung zeigen:
- Fig. 1: eine beispielhafte Darstellung eines Fahrzeugs, beispielsweise eines Fahrrads;
- Fig. 2: eine beispielhafte Radeinheit mit einem Bremssystem mit einer Bremsscheibe;
- Fig. 3: eine Aufsicht auf die Bremsscheibe mit einem Reibring und einem Montagering;
- Fig. 4: eine ausschnittsweise vergrößerte Darstellung der Bremsscheibe;
- Fig. 5: eine nochmals vergrößerte ausschnittsweise Darstellung eines in Figur 4 mit V bezeichneten Bereichs mit einem Anschlagelement;
- Fig. 6: eine ähnliche Aufsicht wie in Figur 3 der Bremsscheibe unter Einwirkung eines Bremsdrehmoments;
- Fig. 7: eine ähnliche Darstellung wie in Figur 5, wobei ein Bremsdrehmoment von dem Anschlagelement auf eine Bremsdrehmomentübertragungsfläche übertragen wird;
- Fig. 8: eine Aufsicht auf einen Bremsscheibenrohling;
- Fig. 9: eine ähnliche ausschnittsweise Darstellung wie in Figur 5 bei dem Bremsscheibenrohling im Bereich eines Anschlagelementes;
- Fig. 10: eine ähnliche ausschnittsweise vergrößerte Darstellung wie in Figur 4 eines weiteren Ausführungsbeispiels einer Bremsscheibe; und
- Fig. 11: eine Aufsicht auf einen als Bremsscheibe ausgebildeten Bremsscheibenrohling ähnlich wie in Figur 8.

Ein in den Figuren beispielhaft gezeigtes Bremssystem, welches im Gesamten mit 100 bezeichnet ist, ist für ein Fahrzeug 110 vorgesehen. Insbesondere ist das Fahrzeug 110 ein lenkergeführtes Fahrzeug.

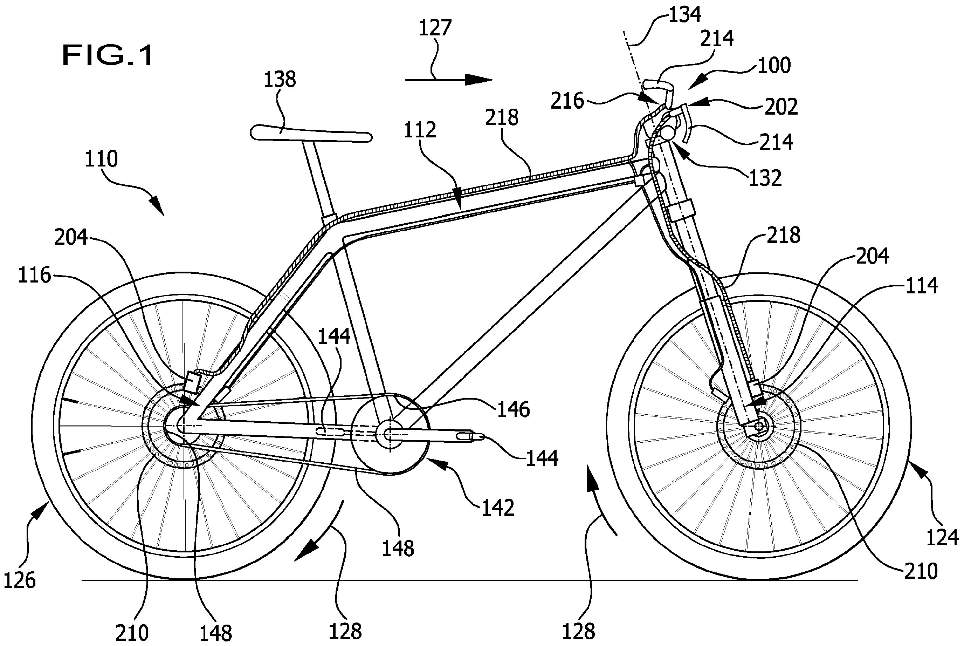

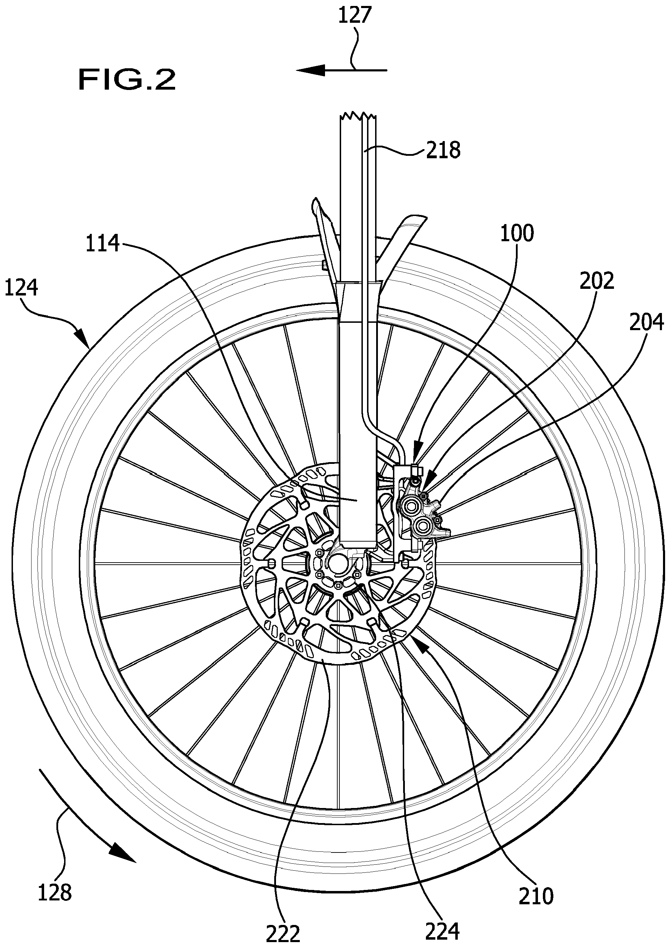

Beispielhaft für ein Fahrzeug 110 ist in Fig. 1 und 2 ein Fahrrad dargestellt. Das Fahrrad 110 umfasst einen Rahmen 112 mit Radaufhängungen 114 und 116, an welchen um eine jeweilige Drehachse drehbar gelagert ein Vorderrad 124 beziehungsweise ein Hinterrad 126 angeordnet ist. Bei einer Vorwärtsfahrt des Fahrzeugs 110 in eine Vorwärtsrichtung 127 drehen sich das Vorderrad 124 und das Hinterrad 126 in einer jeweiligen Laufrichtung 128 um ihre jeweilige Drehachse.

Insbesondere weist das Fahrzeug 110, hier das Fahrrad, einen Lenker 132 auf, welcher insbesondere um eine Lenkerdrehachse 134 drehbar am Rahmen 112 befestigt ist. Mittels des Lenkers 132 lässt sich das Vorderrad 124 lenken und somit bei einer Fahrt mit dem Fahrzeug 110 die Fahrtrichtung beeinflussen.

Insbesondere weist das Fahrzeug 110 außerdem einen Sattel 138 für einen Fahrer auf.

Insbesondere weist das Fahrzeug 110 ein im Ganzen mit 142 bezeichnetes Antriebssystem auf, welches beispielsweise zumindest teilweise durch die Muskelkraft des Fahrers antreibbar ist. Vorzugsweise umfasst bei diesem Ausführungsbeispiel das Antriebssystem 142 drehbar an dem Rahmen 112 gelagerte Pedale 144 mittels welchen über Zahnräder 146 und eine Kette 148 eine Drehbewegung auf das Hinterrad 126 übertragen werden kann.

Somit kann ein Fahrer durch seine Muskelkraft mittels des Antriebssystems 142, hier durch Betätigung der Pedale 144, das Fahrzeug 110 in Bewegung setzen und beschleunigen.

Das Bremssystem 100 zum Bremsen des Fahrzeugs 110 umfasst insbesondere eine Betätigungseinrichtung 202 mittels welcher mit einer Bremszange 204 auf zumindest eine an einem der Räder 124, 126 angeordnete Bremsscheibe 210 bremsend eingewirkt werden kann.

Beispielsweise umfasst die Betätigungseinrichtung 202 einen am Lenker 132 angeordneten Bremshebel 214, welcher betätigungswirksam mit der Bremszange 204 verbunden ist. Beispielsweise ist die Betätigungseinrichtung 202 eine hydraulische Betätigungseinrichtung 202, bei welcher mittels des Bremshebels 214 Druck in einem Hydrauliksystem 216 ausgeübt wird und der Druck über eine Hydraulikleitung 218 an die Bremszange 204 zur Betätigung derselben übertragen wird.

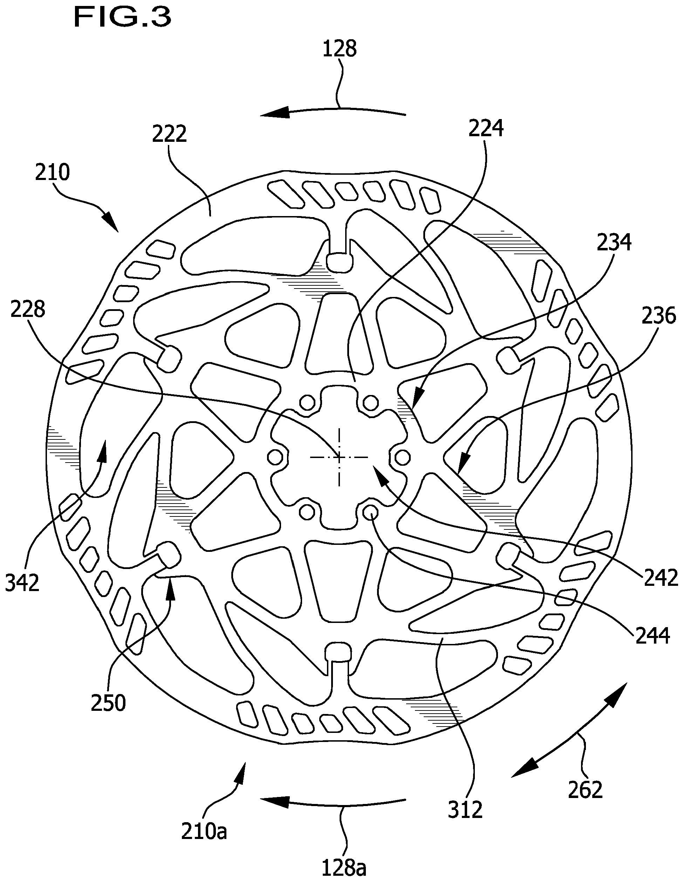

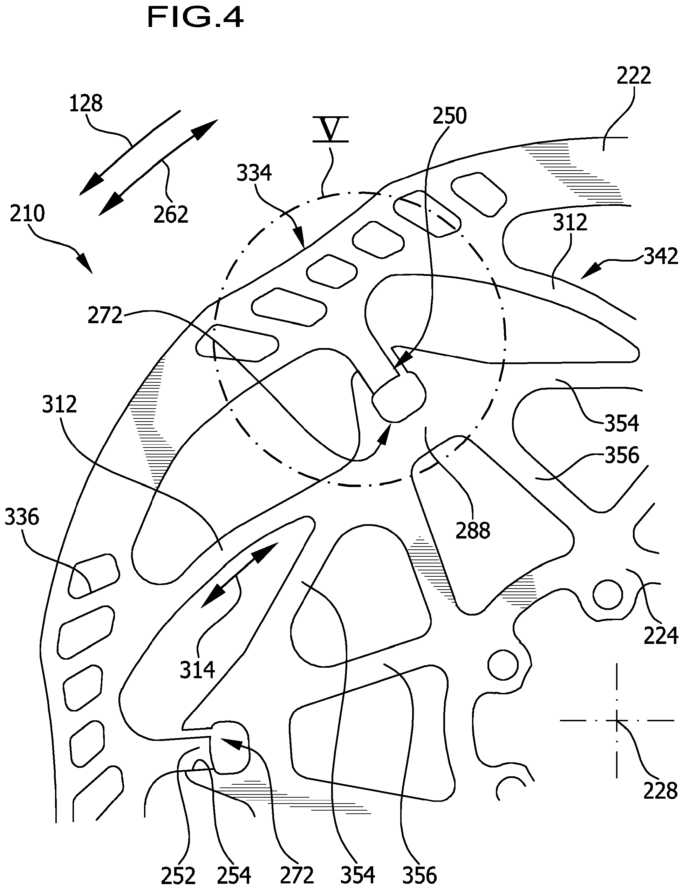

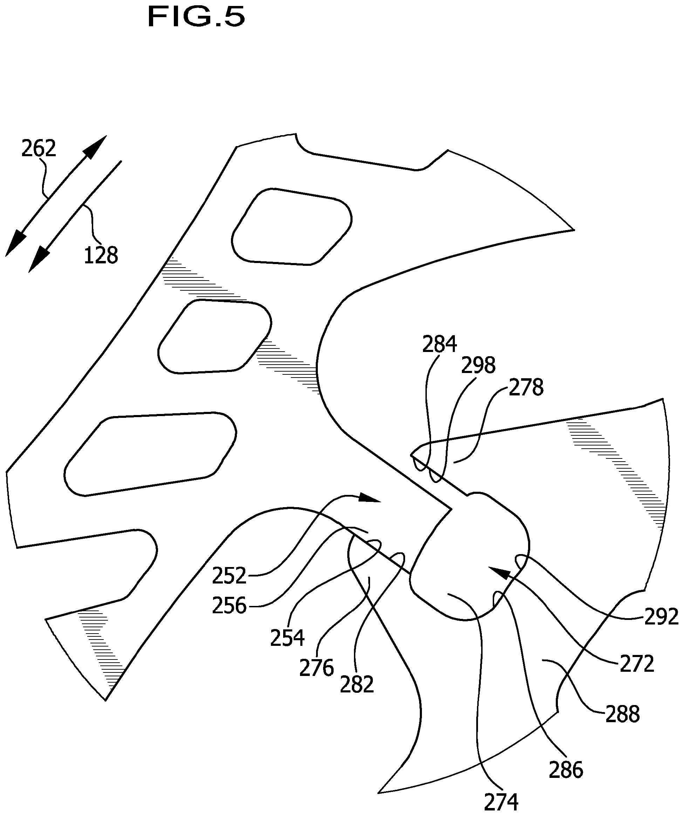

Die Bremsscheibe 210, welche beispielhaft in den Fig. 3-6 dargestellt ist, umfasst einen Reibring 222 und einen Montagering 224, welche insbesondere im Wesentlichen konzentrisch zu einer Bremsscheibenachse 228 angeordnet sind. Der Reibring 222 ist zur Bremsscheibenachse 228 radial außenliegend angeordnet und der Montagering 224 ist in einem radial inneren Bereich 234 der Bremsscheibe 210 angeordnet, wobei insbesondere der innere Bereich 234 der radial am innenliegenden Bereich der Bremsscheibe 210 ist.

Insbesondere weist bei diesem Ausführungsbeispiel die Bremsscheibe 210 einen Zwischenringabschnitt 236 auf, welcher radial zwischen dem Reibring 222 und dem Montagering 224 angeordnet ist und mit diesen verbunden ist. Vorzugsweise sind der Reibring 222, der Montagering 224 und der Zwischenringabschnitt 236 einstückig ausgebildet.

Der Montagering 224 weist bei diesem Ausführungseispiel einen zentralen Durchbruch 242 auf, durch welchen eine Achse eines der Räder 124, 126 hindurchgreifen kann. Die Bremsscheibenachse 228 verläuft durch den zentralen Durchbruch 242 und fällt mit der Drehachse des Rads 124, 126 an welches die Bremsscheibe 210 ordnungsgemäß angeordnet ist zusammen. Der Montagering 224 weist bei diesem Ausführungsbeispiel außerdem Befestigungslöcher 244 auf für Befestigungsmittel, mittels welchen die Bremsscheibe 210 an das entsprechende Rad 124, 126, insbesondere an eine Nabe desselben, montiert werden kann. Bei Varianten des Ausführungsbeispiels kann die Befestigung auch anders erfolgen, beispielsweise mittels eines gezahnten Ringabschnitts, welcher in eine korrespondierende Zahnung eingreift.

Der Reibring 222 und der Montagering 224 sind zumindest teilweise durch eine Verbindung 250 miteinander verbunden, die bei diesem Ausführungsbeispiel unter Vorspannung steht und kraft- und formschlüssig aber nicht stoffschlüssig ist.

Die Verbindung 250 umfasst ein Anschlagelement 252 welches sich an einer Stützfläche 254 abstützt. Insbesondere stützt sich das Anschlagelement 252 kraftbeaufschlagt an der Stützfläche 254 ab und wird durch die Vorspannung an diese angepresst. Außerdem steht das Anschlagelement 252 mit seinem an der Stützfläche 254 anliegenden und sich abstützenden Stützteil 256 in Reibkontakt mit der Stützfläche 254.

Die Stützfläche 254 erstreckt sich zumindest näherungsweise senkrecht zu einer Umlaufrichtung 262, welche um die Bremsscheibenachse 228 herum verläuft. Eine orientierte Richtung der Umlaufrichtung 262 fällt mit der vorgesehenen Laufrichtung 128 zusammen, wenn die Bremsscheibe 210 an eines der Räder 124, 126 ordnungsgemäß montiert ist und die andere orientierte Richtung der Umlaufrichtung 262 ist zur Laufrichtung 128 dann entgegengesetzt.

Das Anschlagelement 252 ist an den Reibring 222 angeformt und erstreckt sich von einer radialen Innenseite desselben radial inwärts in Richtung zur Bremsscheibenachse 228. Beispielsweise ist das Anschlagelement 252 als an den Reibring 222 angeformte Zapfen ausgebildet.

Bei diesem Ausführungsbeispiel wird das Anschlagelement 252 von einer Aufnahme 272 mit einem Aufnahmeraum 274 aufgenommen.

Die Aufnahme 272 wird insbesondere von zwei in der Umlaufrichtung 262 gegenüberliegend angeordneten Vorsprüngen 276, 278 ausgebildet, wobei der vordere Vorsprung 276 bezogen auf die Laufrichtung 128 vor dem hinteren Vorsprung 278 angeordnet ist. Zwischen den Vorsprüngen 276 und 278 erstreckt sich der Aufnahmeraum 274 als ein in der zur Bremsscheibenachse 228 axialen Richtung durchgängig offener Durchbruch, welcher sich in radialer Richtung zum Reibring 222 öffnet.

Bei diesem Ausführungsbeispiel ist die Aufnahme 272 an dem Zwischenringabschnitt 236 angeordnet und die Vorsprünge 276, 278 erstrecken sich von einem äußeren Umfang des Zwischenringabschnitts 236 radial nach außen in Richtung auf den Reibring 222 zu.

Die Vorsprünge 276, 278 weisen jeweils zumindest näherungsweise zur Umlaufrichtung 262 sich senkrecht erstreckende Begrenzungsflächen 282, 284 auf, welche bezogen auf die Umlaufrichtung 262 einander gegenüberliegend angeordnet sind und in der Umlaufrichtung 262 jeweils den Aufnahmeraum 274 begrenzen. Insbesondere sind die beiden Begrenzungsflächen 282, 284 durch eine Endbegrenzungsfläche 286 miteinander verbunden, wobei die Endbegrenzungsfläche 286 den Aufnahmeraum 274 im Wesentlichen radial inwärts begrenzt.

Die Endbegrenzungsfläche 286 der Aufnahme 272 wird im Wesentlichen von einem Aufnahmeabschnitt 288 der Bremsscheibe 210 ausgebildet, wobei die Vorsprünge 276 und 278 an diesen Aufnahmeabschnitt 288 angeformt sind. Bei dem Ausführungsbeispiel wird die Aufnahme 272 von dem Zwischenringabschnitt 236 ausgebildet, so dass der Aufnahmeabschnitt 288 vorliegend ein Teil des Zwischenringabschnitts 236 ist.

Der Aufnahmeraum 274 ist etwas größer als ein von diesem aufgenommenen Abschnitt des Anschlagelements 252, so dass die hierdurch ausgebildete Verbindung 250 eine Flexibilität aufweist. Beispielsweise können dadurch Belastungen, Verzerrungen und/oder Spannungen vermieden werden, da unterschiedliche thermische Ausdehnungen, welche durch unterschiedliche thermische Belastungen des Reibrings 222 und der restlichen Teile der Bremsscheibe 210 insbesondere bei einem Bremsvorgang entstehen, ausgeglichen werden können.

Insbesondere bietet der Aufnahmeraum 274 dem Anschlagelement 252 einen kleinen Spielraum, wobei insbesondere in der Aufsicht eine Fläche des Aufnahmeraums 274 vorzugsweise höchstens drei Mal so groß ist wie eine Fläche des aufgenommenen Abschnitts des Anschlagelements 252. Insbesondere ist ein radial inneres Ende 292 der Aufnahme 272, welches im Wesentlichen von der Endbegrenzungsfläche 286 ausgebildet wird, von einem radial inwärts gerichteten Ende 294 des Anschlagelements 252 mit einem Abstand beabstandet, welcher kleiner ist als eine radiale Erstreckung des Anschlagelements 252.

Bei dem vorliegenden Beispiel wird die Stützfläche 254 durch die Begrenzungsfläche 282 des vorderen Vorsprungs 276 ausgebildet.

Außerdem ist eine Drehmomentübertragungsfläche 298 vorgesehen, an welcher bei einer ordnungsgemäßen Montage der Bremsscheibe 210 an eines der Räder 124, 126 bei einem Bremsvorgang ein durch die Bremslast erzeugtes Drehmoment übertragen werden kann und wird.

Die Drehmomentübertragungsfläche 298 erstreckt sich zumindest näherungsweise senkrecht zur Umlaufrichtung 262 und ist bezogen auf die vorgesehene Laufrichtung 128 hinter dem Anschlagelement 252 in höchstens einem geringen Abstand angeordnet. Vorzugsweise ist der geringe Abstand kleiner als 1 mm, vorzugsweise kleiner als 0,5 mm.

Die Drehmomentübertragungsfläche 298 ist eine freie Endfläche, hier des Vorsprungs 278 und wird bei diesem Ausführungsbeispiel durch die Begrenzungsfläche 284 ausgebildet.

Beispielsweise sind die Stützflächen 254 und die Drehmomentübertragungsfläche 298 als im Wesentlichen flache Flächen ausgebildet. Bei Varianten des Ausführungsbeispiels ist vorgesehen, dass zumindest eine dieser Flächen 254, 298 Flächenabschnitte aufweist, welche schräg zur Umlaufrichtung 262 und schräg zur axialen Richtung der Bremsscheibenachse 282 verlaufen und somit dem Anschlagelement 252 beim Anliegen an diese Flächenabschnitte zusätzlichen axialen Halt bieten. Besonders vorteilhaft ist es dabei, wenn die jeweilige Fläche 254, 298 mindestens zwei zueinander komplementär verlaufende Flächenabschnitte aufweist, zwischen welchen in axialer Richtung das Anschlagelement angeordnet ist und somit in axialer Richtung beidseitig Halt durch einen jeweiligen Flächenabschnitt erhält.

Des Weiteren ist vorgesehen, dass der Reibring 222 durch Tragestege 312 getragen wird. Insbesondere verlaufen die Tragestege 312 schräg zur radialen Richtung der Bremsscheibenachse 228, wobei insbesondere eine Richtung 314 einer Längserstreckung der Tragestege 312 mit der radialen Richtung einen Winkel zwischen 20° und 80° einschließt. In Richtung 314 der Längserstreckung sind die Tragestege 312 wesentlich länger ausgebildet als senkrecht zur Längserstreckungsrichtung 314.

Die Tragestege 312 erstrecken sich in Richtung 314 der Längserstreckung quer zur radialen Richtung und bei dieser Variante des Ausführungsbeispiels entgegengesetzt zur vorgesehenen Laufrichtung 128 radial inwärts bis zu dem Zwischenringabschnitt 236, an welchen sie angeformt sind. Vorzugsweise sind die Tragestege 312 leicht gekrümmt ausgebildet.

Vorzugsweise gehen die Tragestege 312 an ihren in Richtung 314 der Längserstreckung gegenüberliegenden Enden sich kontinuierlich verbreiternd in Fortsätze des Reibrings 222 beziehungsweise des Zwischenringabschnitts 236 über.

Besonders vorteilhaft ist es, wenn die Tragestege 312 durch ihre Form gelenkartig ausgebildet sind, so dass bei einer Erwärmung derselben, welche insbesondere in Richtung von dem Reibring 222 auf diese einwirkt, die Tragestege 312 sich strecken und verziehen, so dass der von diesem getragene Reibring 222 eine Drehung in der Umlaufrichtung 262, insbesondere entgegengesetzt zur vorgesehenen Laufrichtung 128, um die Bremsscheibenachse 228 erfährt.

Die Tragestege 312 weisen einen durch eine thermische Last induzierten Materialverzug auf, mittels welchem sie die Spannung für die Verbindung 250 bereitstellen und über den Reibring 222 die Anschlagselemente 252 auf die Stützfläche 254 pressen.

Bei einer ein Erwärmen umfassenden thermischen Beeinflussung der Tragestege 312 setzen sich diese bei der darauffolgenden Abkühlung durch einen Materialverzug irreversibel und verdrehen sich in der vorgesehenen Laufrichtung 128 über ihre Ausgangsform vor der thermischen Last hinaus, so dass der Reibring 222 und mit ihm die Anschlagelemente 252 ebenfalls verdreht werden und die Anschlagelemente 252 unter Spannung an deren jeweilige Stützfläche 254 angepresst werden.

Besonders günstig ist es, wenn der Reibring 222 gehärtet, insbesondere thermisch gehärtet ist. Insbesondere ist vorgesehen, dass bei der thermischen Härtung, vorzugsweise durch Induktionshärtung, auch die thermische Beeinflussung der Tragestege 312 erfolgt.

Besonders vorteilhaft ist es, wenn der Reibring 222 entlang seiner Erstreckung in der Umlaufrichtung 262 in zur Bremsscheibenachse 228 radialer Richtung variierend ausgebildet ist. Beispielsweise weist er in Abschnitten mit radialen Einbuchtungen 334 einen verringerten Außenradius, welcher von der Bremsscheibenachse 228 bis zur äußersten Erstreckung des Reibrings 222 in der radialen Richtung gemessen wird, auf. Vorzugsweise weist der Reibring 222 Abschnitte auf, in welchen er einen verringerten Innenradius aufweist, wobei der Innenradius von der Bremsscheibenachse 228 in radialer Richtung bis zur radialen Innenseite des Reibrings 222 gemessen wird. Insbesondere weist der Reibring 222 in Abschnitten, in welchen ein Anschlagelement 252 und/oder ein Tragsteg 312 angeformt ist, einen verringerten Innenradius auf.

Bei einigen Varianten weist der Reibring 222 entlang seiner Erstreckung in der Umlaufrichtung 262 eine im Wesentlichen konstante Breite in radialer Richtung auf, wobei bei bevorzugten Varianten diese Breite entlang der Erstreckung in der Umlaufrichtung 262 variiert.

Beispielsweise weist der Reibring 222 Durchbrüche 336 als Kühlöffnungen auf. Insbesondere sind jeweils mehrere Durchbrüche 336 in einem Abschnitt gruppiert zusammengeordnet, so dass in der Umlaufrichtung 262 sich Abschnitte mit jeweils mehreren Durchbrüchen 336 mit insbesondere zumindest näherungsweise gleichlangen Abschnitten, welche durchbruchsfrei sind, abwechseln. Günstiger weise sind die Anschlagelemente 252 und die Tragestege 312 jeweils an einen Abschnitt des Reibrings 222 angeordnet, in welchem mehrere als Kühlöffnung ausgebildete Durchbrüche 336 angeordnet sind.

Radial inwärts an den Reibring 222 schließt sich ein freier Ringbereich 342 an, welcher konzentrisch zum Reibring 222 ausgebildet ist und vorzugsweise in radialer Richtung eine größere Breite als der Reibring 222 aufweist. Dabei weist der freie Ringbereich 342 zumindest größtenteils materialfreie Bereiche auf und ist somit größtenteils materialfrei.

Vorzugsweise erfolgt die Verbindung 250 in dem freien Ringbereich 342, so dass bei diesem Ausführungsbeispiel das Anschlagelement 252 und die die Stützflächen 254 und die Drehmomentübertragungsflächen 298 ausbildenden Vorsprünge 276, 278 in den freien Ringbereich 342 hineinragen und dort die Verbindung 250 ausbilden. Des Weiteren überbrücken lediglich die Tragestege 312 den freien Ringbereich 342 und ansonsten ist der freie Ringbereich 342 materialfrei und frei von weiteren Teilen der Bremsscheibe 210.

Vorzugsweise ist der Zwischenringabschnitt 236 aus Verstrebungen 354, 356 fachwerkartig ausgebildet. Dabei sind beispielsweise zumindest näherungsweise in der Umlaufrichtung 262 verlaufende Verstrebungen 354 vorgesehen, welche sich insbesondere zwischen den die Aufnahme 272 ausbildenden Abschnitten 288 des Zwischenringabschnitts 236 erstrecken. Radiale Verstrebungen 356 erstrecken sich zumindest näherungsweise in zur Bremsscheibenachse 228 radialer Richtung und erstrecken sich insbesondere zwischen den die Aufnahmen 272 ausbildenden Abschnitten 288 und dem Montagering 224, an welchen diese vorzugsweise angeformt sind.

Insbesondere ist der Zwischenringabschnitt 236 abgesehen von den Verstrebungen 354 und 356 materialfrei.

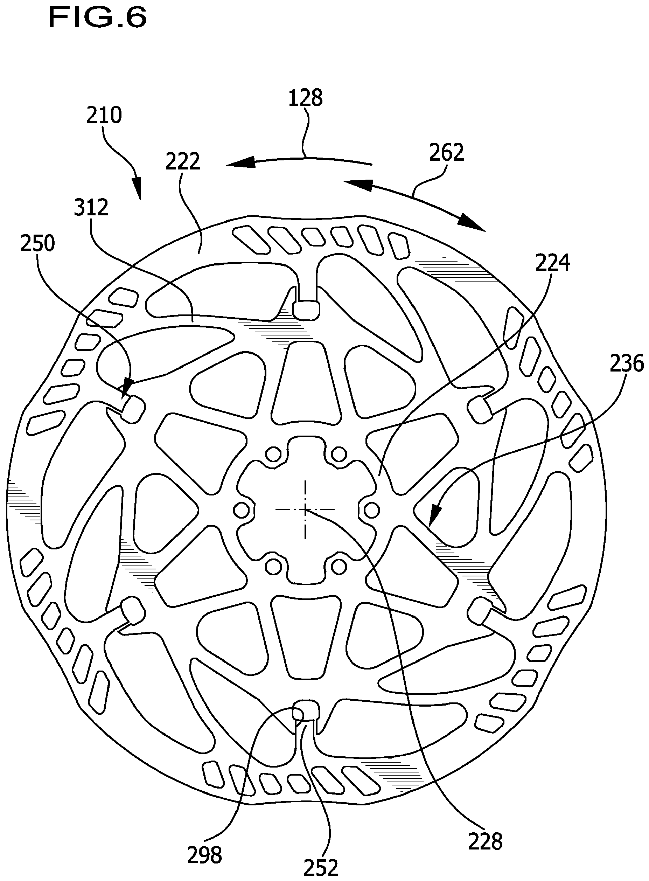

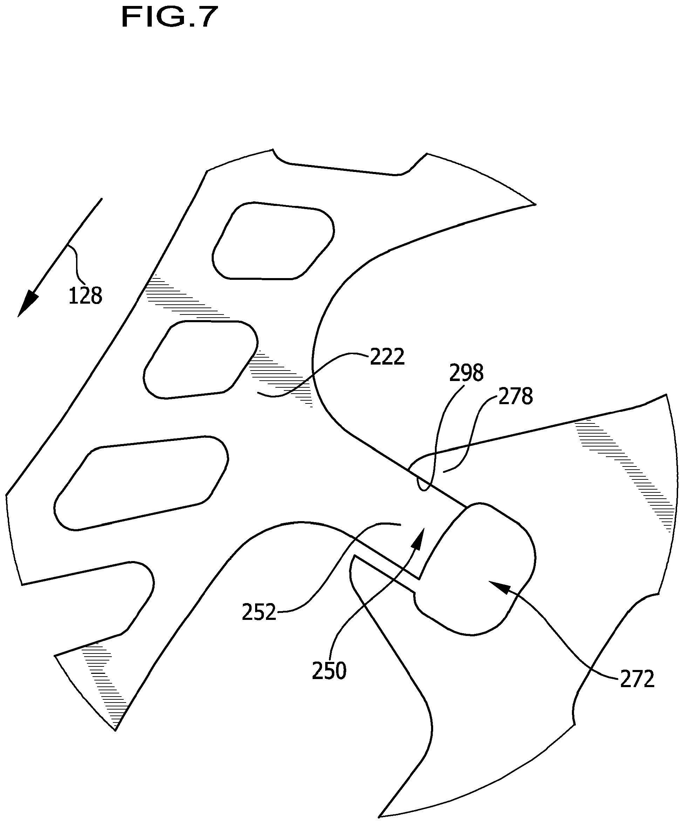

In den Fig. 6 und 7 ist die Bremsscheibe 210 unter der Einwirkung eines Bremsdrehmoments bei einem Bremsvorgang dargestellt.

Bei dem Bremsvorgang wirkt die Bremszange 204 kraftbeaufschlagend auf den Reibring 222 ein, wobei insbesondere zwei Bremsbacken der Bremszange 204 axial beidseitig auf den Reibring 222 einwirken und diesen zwischen sich einklemmen. Bei einer Vorwärtsfahrt des Fahrzeugs 110 dreht sich die Bremsscheibe 210 durch die Montage des Montagerings 224 an das Rad 124, 126 mit diesem in der Laufrichtung 128 um die Bremsscheibenachse 228 und durch die Bremseinwirkung der Bremszange 204 auf den Reibring 222 wirkt ein Bremsdrehmoment zwischen dem Reibring 222 und den restlichen Teilen der Bremsscheibe 210, hier also insbesondere dem Zwischenringabschnitt 236 und dem Montagering 224. Das Bremsdrehmoment wirkt entgegengesetzt zu der orientierten Laufrichtung 128 in der Umlaufrichtung 262.

Über die Verbindung 250 wird das Bremsdrehmoment zumindest teilweise übertragen, wobei die Anschlagelemente 252 zumindest bei einem Bremsvorgang bei einer ordnungsgemäßen Montage an ihre jeweilige Drehmomentübertragungsfläche 298 anliegen und je nach Größe des Bremsdrehmoments an die jeweilige Drehmomentübertragungsfläche 298 angepresst werden. Hierfür ist ein jeweiliges Anschlagelement 252 bezogen auf die vorgesehene Laufrichtung 128 in der Umlaufrichtung 262 vor seiner entsprechenden Drehmomentübertragungsfläche 298 angeordnet.

Bei diesem Ausführungsbeispiel ist die jeweilige Verbindung 250 derart ausgebildet, dass ein jeweiliges Anschlagelement 252 an seiner entsprechenden Drehmomentübertragungsfläche 298 kraftübertragend anliegt, wenn bei dem entsprechenden Bremsvorgang das auftretende Drehmoment einen Mindestdrehmomentschwellenwert übersteigt. Dabei ist eine Größe des Mindestdrehmomentschwellenwertes dadurch bestimmt, dass ein jeweiliges Anschlagelement 252 zuerst von seiner Anlage an die entsprechende Stützfläche 254 entfernend in der Umlaufrichtung 262 zur Drehmomentübertragungsfläche 298 hinbewegt werden muss.

Bei dem Bremsvorgang werden die Tragestege 312 durch deren von dem Reibring 222 entgegengesetzt zur vorgesehenen Laufrichtung 128 sich hinweg erstreckenden radial inwärts gerichteten Erstreckung auf Druck belastet und übertragen auch einen Teil des Drehmoments. Da jedoch über die Verbindung 250, insbesondere die an ihre jeweilige Drehmomentübertragungsfläche 298 kraftübertragend anliegenden Anschlagelemente 252, ebenfalls ein Teil, insbesondere ein Großteil, des auftretenden Bremsdrehmoments übertragen wird, können die Tragestege 312 dünner ausgebildet werden als bei Bremsscheiben ohne eine Verbindung 250.

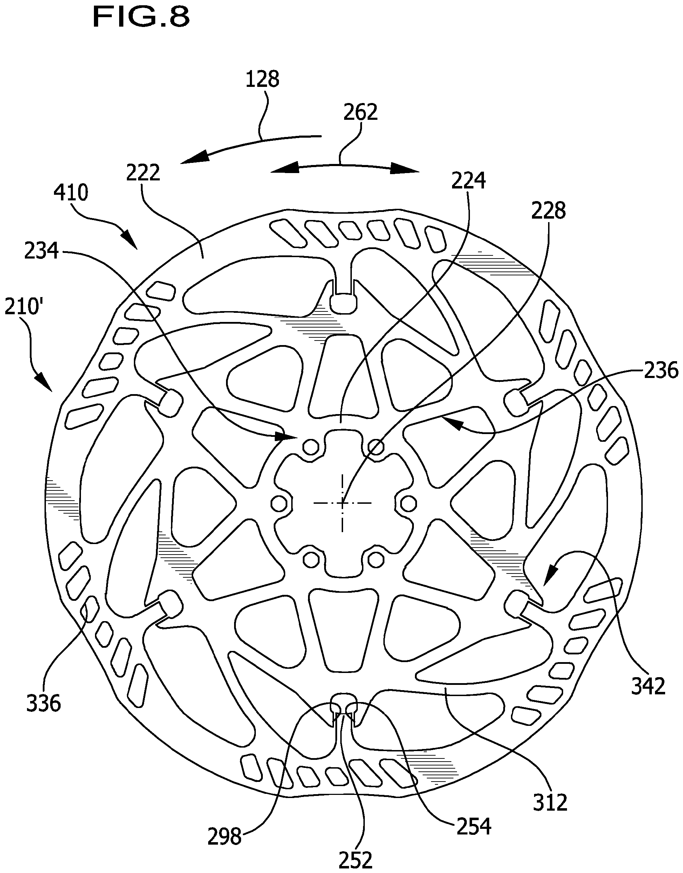

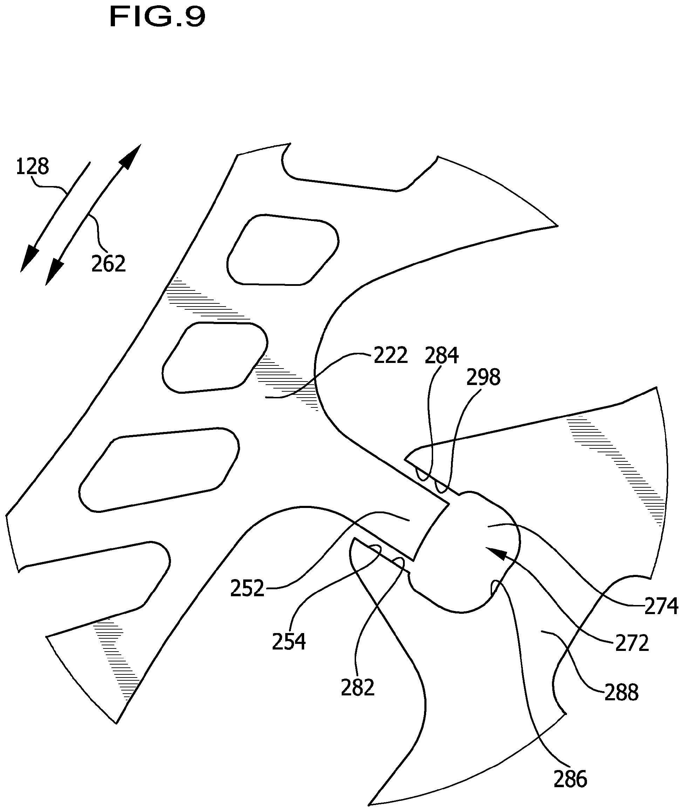

In den Fig. 8 und 9 ist ein Bremsscheibenrohling 410 dargestellt, welcher in einem Vorzustand ist und nach einer weiteren Bearbeitung, insbesondere einer thermischen Behandlung, die Bremsscheibe 210 ausbildet.

Der Bremsscheibenrohling 410 weist wie die Bremsscheibe 210 einen Montagering 224, welcher insbesondere im radial inneren Bereich 234 angeordnet ist, und vorzugsweise einen Zwischenringabschnitt 236 wie voranstehend erläutert auf.

Außerdem weist der Bremsscheibenrohling 410 einen Reibring 222 auf, welcher vorzugsweise zumindest die meisten Merkmale wie voranstehend erläutert, aufweist. Insbesondere wird der Reibring 222 von Tragestegen 312, welche insbesondere einen freien Ringbereich 342 überbrücken, getragen und günstiger weise wie voranstehend erläutert ausgebildet sind.

Beispielsweise weist der Reibring 222 auch Kühlöffnungen ausbildende Durchbrüche 336 und entlang der Erstreckung in der Umlaufrichtung 262 eine variierende radiale Ausbildung auf, vorzugsweise wie voranstehend detailliert erläutert.

Auch weist der Bremsscheibenrohling 410 Elemente zur Ausbildung der voranstehend detailliert erläuterten Verbindung 250 auf, also insbesondere Anschlagelemente 252 und korrespondierende Stützflächen 254 und Drehmomentübertragungsflächen 298, welche insbesondere von ein jeweiliges Anschlagelement 252 aufnehmenden Aufnahmen 272 ausgebildet werden. Jedoch ist die Verbindung 250 noch nicht vollendet, also insbesondere noch nicht kraft- und formschlüssig und die für die Verbindung 250 notwendige Vorspannung ist noch nicht bereitgestellt. Insbesondere liegen die Anschlagelemente 252 noch nicht an ihrer jeweiligen Stützfläche 254 an.

Beispielsweise ist der Reibring 222 noch nicht gehärtet oder gehärtet, jedoch nicht mit einer derartigen thermischen Last, welche, insbesondere wie voranstehend erläutert, die Verbindung 250 vollendet hätte.

Bei diesem Beispiel des Bremsscheibenrohlings 410 greifen die Anschlagelemente 252 in die jeweilige Aufnahme 272 ein, sind jedoch in der Umlaufrichtung 262 noch von der jeweiligen Stützfläche 254 und der jeweiligen Drehmomentübertragungsfläche 298 durch jeweilige kleine Spalte beabstandet. Der derartige Spalt zwischen dem Anschlagelement 252 und einer der Flächen, also der Stützfläche 254 oder der Drehmomentübertragungsfläche 298, beträgt vorzugsweise höchstens 1 mm, in besonders günstiger Weise höchstens 0,2 mm.

Wird nun der Bremsscheibenrohling 410 einer entsprechenden Bearbeitung unterzogen, insbesondere einer thermischen Last ausgesetzt, welche vorzugsweise im Bereich des Reibrings 222 einwirkt, wird die Verbindung 250 vollendet. Insbesondere wird eine Vorspannung induziert, vorzugsweise durch einen Materialverzug, und die Anschlagelemente 252 liegen in Reibkontakt an deren jeweilige Stützfläche 254 an und stützen sich insbesondere kraftbeaufschlagt an diesen ab. Insbesondere erfolgt die Fertigstellung der Verbindung 250 durch eine irreversible Verformung der Tragestege 312, welche beispielsweise durch Erwärmen und ein irreversibles Setzen beim darauffolgenden Abkühlen erfolgt. Insbesondere wird hinsichtlich der Fertigstellung der Verbindung 250 auf die voranstehenden Erläuterungen vorteilhafter Ausbildungen verwiesen.

Die Fertigstellung der Verbindung 250 bei dem Bremsscheibenrohling 410 kann beispielsweise als ein Fertigungsschritt bei der Fertigung einer Bremsscheibe 210 erfolgen, insbesondere wie voranstehend erläutert.

Bei Varianten ist vorgesehen, dass die Fertigstellung der Verbindung 250 durch eine bei einem Bremsvorgang erzeugte thermische Last erfolgt. So ist der Bremsscheibenrohling 410 insbesondere also auch eine Bremsscheibe 210', welche bereits bei einem Fahrzeug 110 eingesetzt werden kann. Erfolgt dann bei einer Fahrt des Fahrzeugs 110 ein Bremsvorgang, bei welchem durch die Bremseinwirkung sich der Reibring 222 und insbesondere zumindest auch Teile der Tragestege 312 ausreichend erwärmen und somit der erforderlichen thermischen Last ausgesetzt sind, wird beim darauffolgenden Abkühlen des Reibrings 222 und insbesondere der erwärmten Teile der Tragestege 312 die Verbindung 250 fertiggestellt. Insbesondere erfolgt dabei das Vollenden der Verbindung 250 durch ein irreversibles Setzen der Tragestege 312 beim Abkühlen wie voranstehend detailliert erläutert.

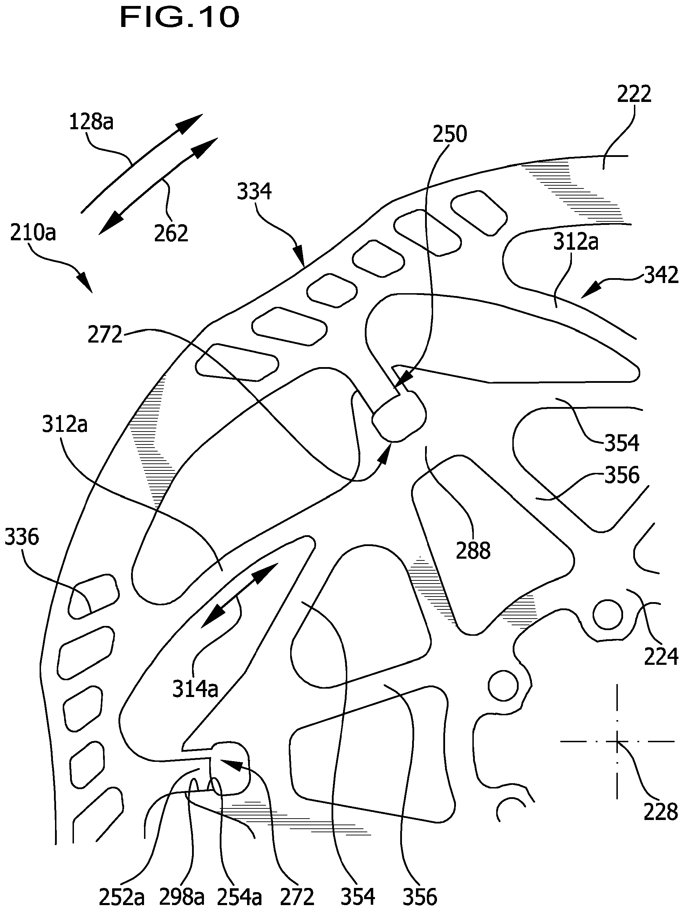

Bei anderen Ausführungsbeispielen von Bremsscheiben 210a liegen Anschlagelemente 252a auch ohne Einwirkung eines Bremsdrehmoments an ihren entsprechenden Drehmomentübertragungsflächen 298a kraftübertragend und mit Reibungskontakt an, insbesondere werden die Anschlagelemente 252a an ihre Drehmomentübertragungsflächen 298a angepresst. Damit bilden die Drehmomentübertragungsflächen 298a bei diesen Ausführungsbeispielen auch die jeweilige Stützfläche 254a aus, wie beispielhaft in Fig. 10 dargestellt ist. Beispielsweise ist eine Bremsscheibe 210a eines solchen Ausführungsbeispiels im Wesentlichen wie die Bremsscheibe 210 ausgebildet.

Die Bremsscheibe 210a weist dabei einen Reibring 222 und einen Montagering 224 auf, welche mittels einer Verbindung 250 miteinander verbunden sind. Insbesondere ist zwischen dem Reibring 222 und dem Montagering 324 auch bei der Bremsscheibe 210a ein Zwischenringabschnitt 236 angeordnet und ein freier Ringbereich 342. Um Wiederholungen zu vermeiden, wird hinsichtlich dieser Ausgestaltungen vollinhaltlich auf die voranstehenden Erläuterungen zur Bremsscheibe 210 und im Zusammenhang mit den Fig. 3 ff. verwiesen, sofern nachfolgend keine abweichende Erläuterung gegeben wird.

Bei der beispielhaften Bremsscheibe 210a, welche im Wesentlichen gleich wie die Bremsscheibe 210 ausgebildet ist, ist die vorgesehene Laufrichtung 128a der Laufrichtung 128 der voranstehenden erläuterten Bremsscheibe 210 entgegengesetzt. Somit entspricht die Stützfläche 254 der voranstehend erläuterten Bremsscheibe 210 auch der Stützfläche 254a bei diesem Ausführungsbeispiel der Bremsscheibe 210a. Darüber hinaus wird aber auch die Drehmomentübertragungsfläche 298a bei der Bremsscheibe 210a durch die Stützfläche 254a ausgebildet.

Bei einem Bremsvorgang wirkt nun ein Bremsdrehmoment entgegengesetzt zu der vorgesehenen Laufrichtung 128a und zumindest ein Teil dieses Drehbremsmoments wird über die Drehmomentübertragungsfläche 298a, welche auch die Stützfläche 254a ist, übertragen und dabei insbesondere auch das Anschlagelement 252a an seine Drehmomentübertragungsfläche 298a angepresst.

Bei diesem Ausführungsbeispiel der Bremsscheibe 210a werden die Tragestege 312a bei einem Bremsvorgang auf Zug belastet.

Alle übrigen Merkmale sind insbesondere zumindest im Wesentlichen wie voranstehend im Zusammenhang mit der Bremsscheibe 210a und den Fig. 3 ff. erläutert, so dass auf die Erläuterungen im Zusammenhang mit diesem Ausführungsbeispiel vollinhaltlich verwiesen wird.

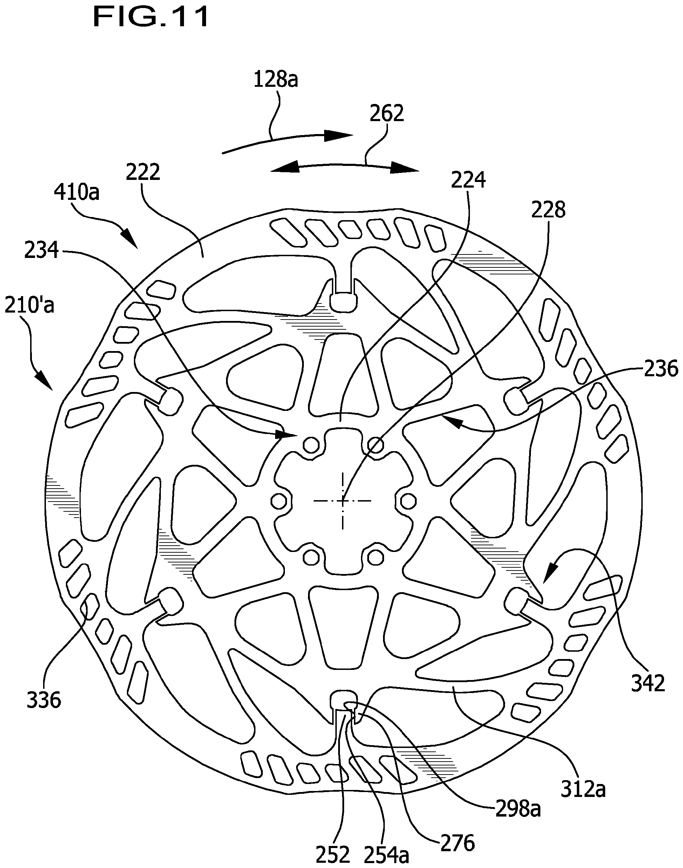

In analoger Weise bildet der voranstehend erläuterte Bremsscheibenrohling 410 auch einen Bremsscheibenrohling 410a für eine Bremsscheibe 210a aus, wie beispielhaft in Fig. 11 dargestellt ist. Dabei ist wiederum die vorgesehene Laufrichtung 128a des Bremsscheibenrohlings 410a zu der Laufrichtung 128 des Bremsscheibenrohlings 410 entgegengesetzt.

Bei dem Bremsscheibenrohling 410a werden die Drehmomentübertragungsfläche 298a und die Stützfläche 254a wiederum durch eine gleiche Fläche ausgebildet. Insbesondere bildet ein Vorsprung 276 diese Flächen 254a und 298a aus.

Alle weiteren Merkmale, Ausbildungen und Modifikationen sind entsprechend wie im Zusammenhang mit dem Bremsscheibenrohling 410 und der Bremsscheibe 210a erläutert, so dass auf diese voranstehenden Erläuterungen vollinhaltlich verwiesen wird.

In analoger Weise bildet der Bremsscheibenrohling 410a auch eine Bremsscheibe 210'a aus, wie beispielhaft in Fig. 11 dargestellt ist.

Auch bei der Bremsscheibe 210'a werden die Stützfläche 254a und die Drehmomentübertragungsfläche 298a von einer gleichen Fläche ausgebildet, welche insbesondere von einem Vorsprung 276 ausgebildet wird. Dabei wird die Verbindung 250 auch bei der Bremsscheibe 210'a erst in Betrieb bei einem Bremsvorgang, bei welchem eine ausreichende thermische Last auf den Reibring 222 und zumindest teilweise auf die Tragestege 312 einwirkt, fertiggestellt.

Alle weiteren Merkmale, Ausbildungen und Modifikationen sind entsprechend wie voranstehend im Zusammenhang mit der Bremsscheibe 210', der Bremsscheibe 210' und den weiteren Ausführungsbeispielen erläutert, so dass auf die voranstehenden Ausführungen vollinhaltlich und entsprechend verwiesen wird.

## Patentansprüche

1. Bremssystem (100) für ein Fahrzeug (110), insbesondere ein lenkergeführtes Fahrzeug (110), umfassend eine Bremsscheibe (210, 210', 210a, 210'a) mit einem Reibring (222) und einem Montagering (224), **dadurch gekennzeichnet , dass** der Reibring (222) und der Montagering (224) zumindest teilweise durch eine Verbindung (250), die kraft- und/oder formschlüssig aber nicht stoffschlüssig ist, miteinander verbunden sind und/oder
dass der Reibring (222) und der Montagering (224) zumindest teilweise über eine unter Vorspannung stehende Verbindung (250) miteinander verbunden sind und/oder
dass der Reibring (222) und der Montagering (224) zumindest teilweise durch eine Verbindung (250) verbunden sind, wobei die Verbindung (250) zumindest eine Stützfläche (254, 254a) und zumindest ein Anschlagelement (252, 252a), welches zumindest in Reibkontakt mit der Stützfläche (254, 254a) steht, umfasst.

2. Bremssystem (100) nach Anspruch 1, **dadurch gekennzeichnet, dass** die zumindest teilweise Verbindung (250) zumindest eine Stützfläche (254, 254a) und zumindest ein Anschlagelement (252, 252a), welches an die zumindest eine Stützfläche (254, 254a) angepresst ist, insbesondere in einer auf eine Bremsscheibenachse (228) bezogene Umlaufrichtung (262) angepresst ist, umfasst.

3. Bremssystem (100) nach einem der voranstehenden Ansprüche,
**dadurch gekennzeichnet, dass** die zumindest teilweise Verbindung (250) zumindest eine Stützfläche (254, 254a) und zumindest ein Anschlagelement (252, 252a), welches sich an der zumindest einen Stützfläche (254, 254a) abstützt, insbesondere kraftbeaufschlagt abstützt, umfasst.

4. Bremssystem (100) nach einem der voranstehenden Ansprüche,
**dadurch gekennzeichnet, dass** zumindest eine Stützfläche (254, 254a) sich zumindest näherungsweise senkrecht zu der auf die Bremsscheibenachse (228) bezogenen Umlaufrichtung (262) erstreckt.

5. Bremssystem (100) nach einem der voranstehenden Ansprüche,
**dadurch gekennzeichnet, dass** die zumindest teilweise Verbindung (250) zumindest eine Drehmomentübertragungsfläche (298, 298a) aufweist, an welcher bei einer ordnungsgemäßen Montage der Bremsscheibe (210, 210', 210a, 210'a) an ein Rad (124, 126) eines Fahrzeugs (110) bei einem Bremsvorgang eine Drehmomentübertragung erfolgt,
dass insbesondere zumindest ein Anschlagelement (252, 252a) bei einer ordnungsgemäßen Montage der Bremsscheibe (210, 210', 210a, 210'a) zumindest bei einem Bremsvorgang, bei welchem das auftretende Bremsdrehmoment einen Mindestdrehmomentsschwellenwert übersteigt, kraftübertragend an der Drehmomentübertragungsfläche (298, 298a) anliegt und/oder
dass insbesondere zumindest eine Drehmomentübertragungsfläche (298, 298a) sich zumindest näherungsweise senkrecht zu der auf die Bremsscheibenachse (228) bezogene Umlaufrichtung (262) erstreckt und/oder
dass insbesondere die Stützfläche (254, 254a) und die Drehmomentübertragungsfläche (298, 298a) für zumindest ein Anschlagelement (252, 252a) durch eine gemeinsame Fläche (252, 252a, 298, 298a) ausgebildet werden, und/oder dass insbesondere die Stützfläche (254, 254a) und die Drehmomentübertragungsfläche (298, 298a) für zumindest ein Anschlagelement (252, 252a) als einander gegenüberliegende Flächen ausgebildet sind und dass insbesondere das zumindest eine Anschlagelement (252, 252a) zwischen den beiden Flächen (254, 254a, 298, 298a) angeordnet ist.

6. Bremssystem (100) nach einem der voranstehenden Ansprüche,
**dadurch gekennzeichnet, dass** zumindest ein Anschlagelement (252, 252a) in einer Aufnahme (272) aufgenommen ist, wobei insbesondere die Aufnahme (272) zumindest eine Fläche von der Stützfläche (254, 254a) und der Drehmomentübertragungsfläche (298, 298a) für das zumindest eine Anschlagelement (252, 252a) ausbildet, dass insbesondere ein Aufnahmeraum (274) von zumindest einer Aufnahme (272) größer als ein von der Aufnahme (272) aufgenommener Abschnitt eines Anschlagelements (252, 252a) ausgebildet ist, so dass insbesondere der Aufnahmeraum (274) Spielraum für das Anschlagelement (252, 252a) bietet, wobei insbesondere der Aufnahmeraum (274) in zur Bremsscheibenachse (228) radialer Richtung Spielraum für das Anschlagselement (252, 252a) bietet.

7. Bremssystem (100) nach einem der voranstehenden Ansprüche,
**dadurch gekennzeichnet, dass** zumindest ein Anschlagelement (252, 252a) an den Reibring (222) angeformt ist und/oder dass zumindest ein Anschlagselement (252, 252a) sich zumindest näherungsweise in zur Bremsscheibenachse (228) radialer Richtung erstreckt und zwar insbesondere von dem Reibring (222) radial inwärts hinweg erstreckt.

8. Bremssystem (100) nach einem der voranstehenden Ansprüche,
**dadurch gekennzeichnet, dass** die Vorspannung für die zumindest teilweise Verbindung (250) durch einen mittels einer thermischen Behandlung induzierten Verzug in einem Material der Bremsscheibe (210, 210', 210a, 210'a) bereitgestellt ist und/oder dass der Reibring (222) gehärtet ist, insbesondere thermisch gehärtet ist.

9. Bremssystem (100) nach einem der voranstehenden Ansprüche,
**dadurch gekennzeichnet, dass** die Bremsscheibe (210, 210', 210a, 210'a) zumindest einen Tragesteg (312) umfasst, welcher insbesondere den Reibring (222) trägt und welcher insbesondere an den Reibring (222) angeformt ist,
dass insbesondere zumindest ein Tragesteg (312) wegen einer thermischen Behandlung einen Verzug aufweist und/oder dass insbesondere zumindest ein Tragesteg (312) eine Vorspannung für die zumindest teilweise Verbindung (250) erzeugt, wobei insbesondere durch diese Vorspannung zumindest ein Anschlagelement (252, 252a) an dessen Stützfläche (254, 254a) gepresst wird und/oder dass insbesondere zumindest ein Tragesteg (312) derart ausgebildet ist, dass bei einem Verzug des zumindest einen Tragesteges (312) der Reibring (222) in der Umlaufrichtung (262) um die Bremsscheibenachse (228) zumindest ein kleines Stück verdreht wird
und/oder
dass insbesondere zumindest ein Tragesteg (312) schräg zur radialen Richtung der Bremsscheibenachse (228) radial inwärts, insbesondere gekrümmt, verlaufend ausgebildet ist und/oder dass insbesondere zumindest ein Tragesteg (312) mit zunehmender Erstreckung in eine zu einer vorgesehenen Laufrichtung (128) eines Rades (124, 128) entgegengesetzten Richtung sich zunehmend von dem Reibring (222) radial inwärts entfernend ausgebildet ist und/oder dass insbesondere zumindest ein Tragesteg (312) bei einer ordnungsgemäßen Montage der Bremsscheibe (210, 210', 210a, 210'a) bei einem Bremsvorgang auf Druck belastet wird.

10. Bremssystem (100) nach einem der voranstehenden Ansprüche,
**dadurch gekennzeichnet, dass** die Bremsscheibe (210, 210', 210a, 210'a) einen Zwischenringabschnitt (236) aufweist, welcher in zur Bremsscheibenachse (228) radialer Richtung radial zwischen dem Reibring (222) und dem Montagering (224) angeordnet ist,
dass insbesondere der Zwischenringabschnitt (236) zumindest eine Aufnahme (272) aufweist und/oder
dass insbesondere an den Zwischenringabschnitt (236) zumindest ein Tragesteg (312) angeformt ist und/oder
dass insbesondere der Zwischenringabschnitt (236) Verstrebungen (354, 356) umfasst und insbesondere fachwerkartig ausgebildet ist.

11. Bremssystem (100) nach einem der voranstehenden Ansprüche,
**dadurch gekennzeichnet, dass** der Zwischenringabschnitt (236) zumindest mit dem Reibring (222) und/oder mit dem Montagering (224) einstückig ausgebildet ist und/oder
dass der Reibring (222) und der Montagering (224) einstückig ausgebildet sind.

12. Bremsscheibenrohling (410, 410a) mit einem Reibring (222), der derart ausgebildet ist, dass zumindest nach einer noch vorzunehmenden Schlussbehandlung, insbesondere nach einer thermischen Behandlung, der Bremsscheibenrohling (410, 410a) eine Verbindung (250) für den Reibring (222) gemäß einem der voranstehenden Ansprüche ausbildet, dass insbesondere zwischen zumindest einem Anschlagselement (252, 252a) und zumindest dessen Stützfläche (254, 254a) und/oder dessen Drehmomentübertragungsfläche (298, 298a) ein Spalt ausgebildet ist.

13. Bremssystem (100) umfassend einen Bremsscheibenrohling (410, 410a), welcher nach einem der voranstehenden auf einen Bremsscheibenrohling gerichteten Ansprüche ausgebildet ist, wobei der Bremsscheibenrohling (410, 410a) als Bremsscheibe (210, 210', 210a, 210'a) ausgebildet ist und eine bei einem noch zu erfolgenden Bremsvorgang erzeugt thermische Last auf den Reibring (222) als Schlussbehandlung ausreichend ist für die Ausbildung der zumindest teilweisen Verbindung (250) gemäß einem der voranstehenden auf eine Bremsscheibe gerichteten Ansprüche.

14. Bremssystem (100) nach einem der voranstehenden Ansprüche, umfassend eine Radeinheit, welche eine Radaufhängung (114, 116) und ein an die Radaufhängung (114, 116) drehbar angeordnetes Rad (124, 126) umfasst, wobei an das Rad (124, 126) die Bremsscheibe (210, 210', 210a, 210'a) oder der als Bremsscheibe ausgebildete Bremsscheibenrohling (410, 410a) gemäß einem der voranstehenden Ansprüche montiert ist.

15. Fahrzeug (110) **gekennzeichnet durch** ein Bremssystem (100) nach einem der voranstehenden Ansprüche.
